# EUROPÄISCHE PATENTSCHRIFT

(11) **EP 3 258 014 B1**
(45) Veröffentlichungstag und Bekanntmachung des Hinweises auf die Patenterteilung: **26.09.2018**
(21) Anmeldenummer: 17000989.8
(22) Anmeldetag: 09.06.2017
(51) Int. Cl.: E01C 19/27

(54) **GUMMIRADWALZE**
RUBBER WHEEL ROLLER
COMPACTEUR À PNEU

(30) Priorität: 13.06.2016 DE 102016007170
(43) Veröffentlichungstag der Anmeldung: 20.12.2017
(73) Patentinhaber: BOMAG GmbH, 56154 Boppard (DE)
(72) Erfinder: Berg, Christian, 56288 Völkenroth (DE); Einolf, Ernst-Josef, 56154 Boppard (DE); Haubrich, Thomas, 56290 Gödenroth (DE); Klein, Thomas, 56653 Wehr (DE); Schönberg, Tobias, 56412 Oberelbert (DE)
(74) Vertreter: Heidler, Philipp

(56) Entgegenhaltungen:
- EP-A2- 2 698 473
- JP-A- 2000 290 919
- JP-A- 2001 140 210
- Hamm Ag: "Innovation on 8 wheels SERIES GRW 180/280", , 1. April 2016 (2016-04-01), XP055422562, Germany Gefunden im Internet: URL:https://media.wirtgen-group.com/media/ 04_hamm/products/documents/series_grw280_e n.pdf [gefunden am 2017-11-08]

## Beschreibung

Die Erfindung betrifft eine Gummiradwalze zur Verdichtung eines Bodens.

Eine gattungsgemäße Gummiradwalze ist beispielsweise aus der EP 0 864 694 A2 bekannt. Gummiradwalzen sind Bodenverdichtungsmaschinen, die mit Rädern, in der Regel Gummirädern, ausgerüstet sind und mit diesen über einen zu verdichtenden Boden fahren. Dazu weisen gattungsgemäße Gummiradwalzen einen Maschinenrahmen mit einem Fahrerstand und den Maschinenrahmen tragende vordere und hintere Fahrwerkseinrichtungen auf, wobei die Fahrwerkseinrichtungen jeweils wenigstens ein Rad umfassen. Die Angaben "vordere" und "hintere" beziehen sich dabei auf die Vorwärtsrichtung der Gummiradwalze, wobei die Gummiradwalze im Arbeitsbetrieb normalerweise abwechselnd vorwärts und rückwärts über den Bodenuntergrund geführt wird. Aufgrund der elastischen Eigenschaften der Räder kommt es dabei zu einem vorteilhaften Knet- bzw. Walkeffekt, durch den eine besonders homogene Verdichtung des Bodens und ein vorteilhafter Porenschluss an der Bodenoberfläche erreicht werden kann. Gattungsgemäße Gummiradwalzen werden sowohl im Erd- als auch im Asphaltbau eingesetzt und dienen beispielsweise der Verdichtung einer Tragschicht einer Straße. Der Verdichtungseffekt der Gummiradwalze kommt maßgeblich durch das Eigengewicht der Maschine zustande und wird durch dieses beeinflusst. Um die für eine gewünschte Verdichtungsleistung notwendige Radlast zu erreichen, müssen die Gummiradwalzen ein hohes Maschinengewicht aufweisen. Vielfach kann das Maschinengewicht der Gummiradwalzen aus diesem Grund durch das Anbringen von Zusatzgewichten am Maschinenrahmen erhöht werden. Gleichzeitig soll die Maschine allerdings möglichst kompakt ausgebildet werden, was dazu geführt hat, dass der Maschinenrahmen gattungsgemäßer Gummiradwalzen regelmäßig vergleichsweise massiv bzw. klobig ist.

Während der Bodenverdichtung ist es für den Fahrer der Gummiradwalze vorteilhaft, wenn er die äußeren Radkanten sowie die Laufflächen der Räder einsehen kann. Die Radkanten sind wichtig, um die Gummiradwalze beispielsweise möglichst exakt entlang einer gewünschten Fahrspur zu lenken, während eine Beobachtung der Laufflächen der Räder frühzeitig erkennen lässt, ob Bodenmaterial an diesen anhaftet, was in unerwünschter Weise zu einer ungleichmäßigen Bodenoberfläche führen kann. Es ist im Stand der Technik bekannt, die Gummiradwalzen mit Kameras und/oder Spiegeln auszustatten, über die die Bereiche der Räder einsehbar gemacht werden, wie beispielsweise in JP 2001 140210 A. Zum einen verschmutzen diese Sichthilfen allerdings vergleichsweise schnell und zum anderen kann der Fahrer der Gummiradwalze viel weniger Details zur Lage der Radkanten bzw. zu Anhaftungen an den Laufflächen erkennen, wenn diese über Kameras und Spiegel abgebildet werden, als bei einem direkten Blick auf diese relevanten Bereiche. Es ist ebenfalls im Stand der Technik bekannt, Sichttunnel zu verwenden, durch die hindurch der Fahrer der Gummiradwalze einen direkten Blick auf die Räder bzw. deren Laufflächen werfen kann. Diese Tunnel verlaufen komplett innerhalb der Maschine und sind bis auf zwei Öffnungen, eine in Richtung des Fahrerstandes und eine in Richtung der Räder, zur Außenumgebung hin verschlossen. Nachteilig hieran ist, dass die Ausbildung von Tunneln im Maschinenrahmen relativ kompliziert ist, viel Bauraum benötigt und darüber hinaus nur eine sehr eingeschränkte Sicht des Fahrers auf die Radkanten bzw. die Laufflächen der Räder ermöglicht. Darüber hinaus müssen diese Tunnel teilweise beleuchtet werden, um überhaupt eine Betrachtung der Räder zu ermöglichen.

Vor diesem Hintergrund ist es die Aufgabe der vorliegenden Erfindung, die Sichtverhältnisse an den bestehenden Gummiradwalzen zu verbessern. Insbesondere ist es die Aufgabe, dem Fahrer der Gummiradwalze zu ermöglichen, den Blick direkt auf relevante Bereiche, beispielsweise Radkanten der äußeren Räder und deren Laufflächen, vom Fahrerstand aus zu ermöglichen. Die verbesserten Sichtverhältnisse sollen dabei nicht zu einem komplizierteren Aufbau der Maschine führen, den Bauraum im Maschinenrahmen nicht übermäßig verringern und möglichst keine weiteren Komponenten, wie beispielsweise Beleuchtungen, benötigen.

Die Lösung dieser Aufgabe gelingt mit einer Gummiradwalze gemäß dem unabhängigen Anspruch. Bevorzugte Weiterbildungen sind in den abhängigen Ansprüchen angegeben.

Konkret gelingt die Lösung der Aufgabe bei einer eingangs genannten gattungsgemäßen Gummiradwalze dadurch, dass im Maschinenrahmen wenigstens eine Sichtausnehmung für die vordere Fahrwerkseinrichtung ausgebildet ist, wobei die Sichtausnehmungen über ihren gesamten Verlauf hinweg zur Seite hin geöffnet ausgebildet sind, wobei durch die Sichtausnehmungen hindurch jeweils eine außenliegende Radkante und eine Lauffläche des wenigstens einen Rades der vorderen Fahrwerkseinrichtung durch einen Fahrer der Gummiradwalze vom Fahrerstand aus einsehbar ist, und wobei die Sichtausnehmung derart ausgebildet ist, dass sie sich in eine Vorwärtsrichtung gesehen in der Horizontalebene zunächst zur Maschinenmitte vergrößert und sich anschließend wieder in Richtung von der Maschinenmitte weg verkleinert.. Die Sichtausnehmung stellt somit einen Sichtkanal zur Verfügung, der ein freies Blickfeld durchgehend vom Fahrerstand bis zum wenigstens einen Rad für einen im Fahrstand befindlichen Fahrer ermöglicht. Die einsehbare Radkante ist eine der beiden stirnseitigen Radkanten der Fahrwerkseinrichtung, die ganz außen an der Gummiradwalze liegen. Diese Radkanten sind besonders wichtig, wenn die Gummiradwalze entlang einer bestimmten Fahrspur oder beispielsweise eng an Hindernissen entlang gesteuert werden muss. Es handelt sich somit um eine der Radkanten des Rades bzw. der Räder der vorderen Fahrwerkseinrichtung, die zu einer der beiden Seiten hin jeweils bzw. am weitesten von der Maschinenmitte entfernt liegen. Die erfindungsgemäße Sichtausnehmung wird insbesondere zumindest unter Beteiligung des Maschinenrahmens gebildet. Sie ist insbesondere ein durch einen, insbesondere in Bezug auf die in Fahrrichtung verlaufende Außenkante der Gummiradwalze, Rücksprung bzw. eine Ausnehmung des Maschinenrahmens zur Maschinenmitte hin gebildeter Kanal in der Außenkontur der Gummiradwalze bzw. des Maschinenrahmens. Die Sichtausnehmung stellt somit einen Bereich dar, in dem sich die Breite der Gummiradwalze in der Horizontalebene von der jeweiligen Seitenaußenwand bzw. Seitenaußenoberfläche quer zur Fahrrichtung der Gummiradwalze vom Beginn der Seitenausnehmung zunächst verkleinert und zumindest zum Ende der Sichtausnehmung wieder vergrößert. Im Bereich der Sichtausnehmung ist die horizontale Breite der Gummiradwalze quer zur Fahrtrichtung, insbesondere in Bezug auf die Maschinenlängsmitte in Fahrtrichtung, somit geringer als in Fahrtrichtung sowohl vor als auch hinter der Sichtausnehmung. Dies ist für eine optimale Bauraumnutzung auch besonders wichtig, die die Sichtausnehmung gerade nicht eine nach vorn oder hinten auslaufende Verjüngung der Maschine bezeichnet, sondern ausdrücklich einen in Fahrtrichtung sowohl nach vorn als auch nach hinten definierten und begrenzten Rücksprung. Die Sichtausnehmung ist somit neben ihren Öffnungen in Blickrichtung (typischerweise nach oben und nach unten) an wenigstens einer weiteren Seite geöffnet, insbesondere zur Außenumgebung hin. Die Öffnung zur Seite hin bedeutet insbesondere quer zur Vorwärtsrichtung der Gummiradwalze nach außen hin beziehungsweise von der Maschinenmitte weg. Dass sich die Sichtausnehmung vom Fahrerstand bis zu den Rädern erstreckt, soll dabei nicht heißen, dass die Sichtausnehmung sich bis in den Fahrerstand hinein bzw. in die Fahrerkabine hinein fortsetzt, sondern dass sie lediglich vom Fahrerstand aus von einem Bediener, der sich im Fahrerstand befindet, einsehbar ist, beispielsweise durch eine Frontscheibe des Fahrerstandes hindurch, durch die der Fahrer in die Sichtausnehmung hineinblicken und durch diese hindurchsehen kann. Die Sichtausnehmung der Erfindung ist also im Gegensatz zu dem Tunnel des Standes der Technik auf mindestens drei Seiten geöffnet, insbesondere in Richtung des Fahrerstandes, zu den Rädern und quer zur Vorwärtsrichtung der Gummiradwalze von der Maschinenmitte weg zur Außenseite hin. Die letztgenannte Öffnung der Sichtausnehmung zieht sich insbesondere über den gesamten Verlauf der Sichtausnehmung hinweg und öffnet die Sichtausnehmung von ihrem fahrerstandseitigen Ende bis zu ihrem radseitigen Ende komplett zur in Längsrichtung seitlichen Außenumgebung der Gummiradwalze hin. Auf diese Weise wird die Sichtausnehmung im Arbeitsbetrieb entweder vom Tageslicht oder von der Baustellenbeleuchtung ausgeleuchtet, so dass in der Regel keine weitere Lichtquelle zur Sichtbarmachung der Radkanten bzw. der Laufflächen der Räder notwendig ist. Durch die erfindungsgemäßen Sichtausnehmungen kann der Fahrer der Gummiradwalze die Radkante und gleichzeitig auch die Lauffläche des, beispielsweise links, außen liegenden Vorderrades und, sofern auch auf der gegenüberliegenden Seite der Gummiradwalze eine Sichtausnehmung vorhanden ist, des rechts außen liegenden Vorderrades einsehen. Sind für die vordere Fahrwerkseinrichtung zwei Sichtausnehmungen vorhanden, kann der Fahrer somit die einander gegenüberliegenden Stirnseiten der vorderen Fahrwerkseinrichtung auf der rechten und auf der linken Seite der Maschine vom Fahrstand aus einsehen. Vom Fahrerstand aus bedeutet insbesondere, dass der Fahrer der Gummiradwalze im Arbeitsbetrieb auf seinem Fahrersitz sitzt und von dieser Position aus, gegebenenfalls unter leichtem Herausbeugen aus dem Fahrstand, die entsprechenden Bereiche durch die jeweilige Sichtausnehmung sehen bzw. beobachten kann. Stellt man sich vom Fahrer ausgehende Sehstrahlen vor, die seine Blickrichtung angeben, so verlaufen die Sichtausnehmungen gemäß der Erfindung entlang dieser Sehstrahlen vom Fahrerstand bis zu den Rädern der Gummiradwalze. Bezugspunkt für die Blickverhältnisse durch die erfindungsgemäße Sichtausnehmung ist somit die Augenhöhe des im Fahrstand befindlichen, insbesondere in einem Fahrersitz des Fahrstandes sitzenden, Bedieners. Dieser ist präzise festgelegt und definiert durch den sogenannten FPCP ("filament postion centre point"; "Mittenauge") gemäß DIN ISO 5006 "Earth-moving machinery - Operator's field of view - Test method and performance criteria". Von diesem Punkt aus sollen die über die erfindungsgemäße Sichtausnehmung erhaltenen Blickbedingungen somit insbesondere vorliegen.

Bevorzugt ist für jede Seite der Gummiradwalze und entsprechend für jede der beiden außenliegenden Stirnseiten der vorderen Fahrwerkseinrichtung jeweils eine Sichtausnehmung an den einander gegenüberliegenden Seiten der Gummiradwalze vorgesehen. Somit sind beiden Stirnseiten der vorderen Fahrwerkseinrichtung und jeweils ein Teil der Lauffläche der stirnseitigen Räder der vorderen Fahrwerkseinrichtung vom Fahrstand aus einsehbar. Die beiden Sichtausnehmungen für die vordere Fahrwerkseinrichtung sind dann insbesondere identisch zueinander ausgebildet, wobei sie an einer vertikalen, parallel zur Maschinenmitte verlaufenden Ebene gespiegelt sind. Die Ausbildung der erfindungsgemäßen Sichtausnehmungen als in den Maschinenrahmen eingeformte Einbuchtungen bzw. Kanäle oder Rücksprünge ermöglicht eine besonders einfache Ausführung des Maschinerahmens ohne zusätzliche Bauteile, wodurch die Herstellungskosten der erfindungsgemäßen Gummiradwalze niedrig gehalten werden.

Durch die besonderen Sichtverhältnisse, die über die erfindungsgemäße Sichtausnehmung erhalten werden, ist es dem Fahrer möglich, auf wenigstens eines und insbesondere beide (bei zwei Sichtausnehmungen) der quer zur Vorwärtsrichtung gesehen außenliegenden Räder der vorderen Fahrwerkseinrichtung bzw. deren in Vorwärtsrichtung verlaufenden Stirnseiten zu blicken, wodurch die Manövrierbarkeit im Arbeitsbetrieb der Gummiradwalze grundlegend verbessert wird. Dabei ist es bevorzugt, wenn die Sichtausnehmung sich von der Außenseite kommend in der Horizontalebene soweit zur Maschinenmitte hin erstreckt, dass der Fahrer vom FPCP aus insbesondere wenigstens ein Drittel, besonders wenigstens die Hälfte und ganz besonders die vollständige Breite des jeweiligen Gummirades einsehen kann. Ergänzend oder alternativ ist die Sichtausnehmung ferner bevorzugt derart ausgebildet, dass der Fahrer, speziell vom FPCP aus, in einer virtuellen vertikalen Referenzebene in Fahrtrichtung lotrecht auf die Außenmantelfläche des Gummirades blickt und/oder zumindest teilweise auf den oberhalb der vertikalen Mitte liegenden Außenmantelflächenbereich. Dann kann der Fahrer neben einer verbesserten Seitenrandsicht auch besonders schnell erkennen, ob beispielsweise Anhaftungen auf den Laufflächen der Gummiräder auftreten und in Reaktion darauf beispielsweise geeignete Prozessparameter (Trennmittelgemisch, Sprüheinrichtung, Fahrgeschwindigkeit etc.) anpassen. Insofern tragen die Sichtausnehmungen auch erheblich zur Verbesserung der Prozesssicherheit bei.

Eine noch genauere Kontrolle der Fahrspur der Gummiradwalze lässt sich erreichen, wenn wenigstens eine weitere Sichtausnehmung vorhanden ist, durch die zumindest eines der äußeren Räder der hinteren Fahrwerkseinrichtung sichtbar ist. Es ist daher bevorzugt, dass im Maschinenrahmen eine dritte Sichtausnehmung für die hintere Fahrwerkseinrichtung ausgebildet ist, wobei die dritte Sichtausnehmung eine durchgehende freie Sicht vom Fahrerstand bis zu den hinteren Rädern erlaubt und vorzugsweise ebenfalls über ihren gesamten Verlauf hinweg zur Seite hin geöffnet ausgebildet ist, wobei durch die dritte Sichtausnehmung hindurch eine quer zur Vorwärtsrichtung außen liegende Radkante und eine Lauffläche des wenigstens einen Rades der hinteren Fahrwerkseinrichtung durch einen Fahrer der Gummiradwalze vom Fahrerstand aus einsehbar ist. Die Ausbildung der dritten Sichtausnehmung entspricht dabei insbesondere der schon beschriebenen Ausbildung der Sichtausnehmungen für die vordere Fahrwerkseinrichtung. Durch die dritte Sichtausnehmung kann der Fahrer eines der äußeren hinteren Räder und insbesondere dessen Radkante und Lauffläche einsehen und die Fahrt der Gummiradwalze auch am Hinterrad kontrollieren. Eine weitere Ausführungsform der Erfindung sieht vor, dass insgesamt vier Sichtausnehmungen vorhanden sind, wobei zwei für die vordere Fahrwerkseinrichtung und zwei für die hintere Fahrwerkseinrichtung vorgesehen sind, und der Fahrer über die Sichtausnehmungen sämtliche Radkanten und Laufflächen der außen liegenden Räder, sowohl vorne und hinten als auch links und rechts an der Gummiradwalze einsehen kann. Insbesondere sind hierbei die Sichtausnehmungen für die vordere Fahrwerkseinrichtung identisch und lediglich gespiegelt ausgebildet und ebenso die Sichtausnehmungen für die hintere Fahrwerkseinrichtung. Durch die erweiterte Sichtkontrolle lässt sich die Gummiradwalze vom Bediener besonders vorteilhaft und einfach steuern. Sofern nachstehend von "den Sichtausnehmungen" die Rede ist, bezieht sich dies auf die wenigstens eine Sichtausnehmung bzw. auf die an der jeweiligen Gummiradwalze vorhandenen Sichtausnehmungen.

Grundsätzlich wäre es für die Sichtverhältnisse auf die Räder am besten, den Maschinenrahmen der Gummiradwalze auf einen skelettartigen Tragrahmen zu reduzieren und dem Fahrer damit einen freien Blick auf sämtliche Räder zu gewähren. Der Maschinenrahmen der Gummiradwalze dient allerdings nicht nur dazu, wie eingangs erwähnt, das Maschinengewicht möglichst zu erhöhen um die Radlast für eine gewünschte Bodenverdichtungsleistung einzustellen, sondern der Maschinenrahmen trägt weitere essentielle Komponenten, beispielsweise das Antriebsaggregat oder einen Wassertank zur Benetzung der Laufflächen der Räder, die durch ihre jeweiligen Dimensionen die Größe und Form des Maschinenrahmens vorgeben. Im Endeffekt muss also ein Kompromiss gefunden werden zwischen der Sichtbarkeit der Räder durch die Sichtausnehmungen und der notwendigen Größe des Maschinenrahmens. Der Maschinenrahmen kann mit anderen Worten nicht in allen Bereichen beliebig weit zur Maschinenmitte zurückversetzt werden, um hier eine Sichtausnehmung für den Fahrer zu schaffen. Die vorhandenen Sichtausnehmungen sind bevorzugter Weise daher derart geschaffen, dass der Maschinenrahmen nur bereichsweise in Richtung zur Maschinenmitte hin zurückspringt und in den restlichen Bereichen der Außenkontur der Gummiradwalze die Sichtausnehmungen nach außen zur Seite hin überragt. Der Maschinenrahmen bildet somit sämtliche Seitenwände der Sichtausnehmungen und begrenzt diese. Insbesondere ist es bevorzugt, wenn wenigstens eine Sichtausnehmung in Vorwärtsrichtung nach vorne und/oder hinten durch vom Maschinenrahmen gebildete Seitenwände begrenzt ist. Auf diese Weise wird ermöglicht, dass gleichzeitig der Fahrer eine freie Sicht durch die Sichtausnehmungen auf die relevanten Räder der Gummiradwalze hat und genügend Bauraum im Maschinenrahmen für die dort untergebrachten Komponenten der Gummiradwalze zur Verfügung gestellt ist. Insbesondere können Komponenten der Gummiradwalze im Maschinenrahmen in den die Sichtausnehmung quer zur Vorwärtsrichtung nach außen überragenden Bereichen untergebracht werden, insbesondere Tanks, wodurch erfindungsgemäß weniger Bauraum verloren geht. Die Sichtausnehmungen sind also beispielsweise als in den Maschinenrahmen und damit die Außenkontur der Gummiradwalze eingesenkte Kanäle ausgebildet, wodurch der Bauraumverlust innerhalb des Maschinenrahmens nur exakt so groß ist, wie für die Sichtausnehmung zur Bereitstellung eines effizienten Sichtkanals für den Fahrer notwendig ist.

Grundsätzlich können die vom Maschinenrahmen gebildeten Seitenwände der Sichtausnehmung unterschiedlich, beispielsweise schräg, zueinander verlaufen. Es hat sich allerdings gezeigt, dass es für die Sichtverhältnisse durch die Sichtausnehmung besonders vorteilhaft ist, wenn die in Vorwärtsrichtung vorderen und hinteren vom Maschinenrahmen gebildeten Seitenwände jeweils einer Sichtausnehmung parallel zueinander verlaufen. Insbesondere bedeutet dies, dass die Sichtausnehmung in Blickrichtung des Fahrers, also in Richtung vom Fahrerstand zu den jeweiligen Rädern einen konstanten Durchmesser aufweist. Dadurch wird ein ungehinderter Blick des Fahrers vom Fahrerstand auf die Räder gewährleistet.

Ideal ist es, wenn die Sichtausnehmung derart ausgebildet ist, dass für einen auf dem Fahrstand befindlichen Bediener durch die Sichtausnehmung hindurch über die obere Lauffläche eines Rades hinweg ein vor der Gummiradwalze liegender Bodenbereich einsehbar ist. Zur Definition des erforderlichen Sehstrahls des auf dem Fahrstand befindlichen Bedieners wird dabei insbesondere auf den sogenannten FPCP (filament position centre point) gemäß ISO 5006:2017 Bezug genommen. Dort wird eine Blickausgangsposition für einen Bediener normiert, der innerhalb eines Fahrstandes auf einem Fahrersitz sitzt. Bei dieser bevorzugten Ausführungsform kann der Fahrer somit durch die Sichtausnehmung hindurch über wenigstens einen Teil der Lauffläche nach schräg unten hinüberblicken und damit einen im Wesentlichen unmittelbar oder zumindest sehr nah vor der Gummiradwalze liegenden Bodenbereich einsehen. Dies ist insbesondere dann von Vorteil, wenn der Fahrer nah an ein Hindernis, beispielsweise an eine Einbaubohle eines Straßenfertigers, heranfahren möchte. Die Sichtausnehmung erstreckt sich dann soweit in Fahrtrichtung nach vorn, dass ein Sichtkanal vom FPCP aus geschaffen wird, der sich von FPCP aus durch die Sichtausnehmung am Gummirad vorbei, idealerweise über die Lauffläche des Gummirades hinweg, bis auf den in Fahrtrichtung vor der Gummiradwalze liegenden Bodenbereich erstreckt.

Insbesondere am in Vorwärtsrichtung vorne liegenden Ende des Maschinenrahmens sind besonders viele Einrichtungen der Gummiradwalze am Maschinenrahmen angeordnet, wie beispielsweise Scheinwerfer, Rückspiegel, etc. Insbesondere bei der wenigstens einen Sichtausnehmung für die vordere Fahrwerkseinrichtung ist es daher bevorzugt, wenn die Sichtausnehmung in Vorwärtsrichtung vorne und hinten durch vom Maschinenrahmen gebildete Seitenwände begrenzt wird, sodass der Maschinenrahmen in diesem Bereich in Vorwärtsrichtung vor und hinter der Sichtausnehmung über diese hervorsteht und so Bauraum für weitere Einrichtungen, beispielsweise als Halterung für Scheinwerfer und/oder Spiegel, zur Verfügung stellt. In Vorwärtsrichtung hinten, also am Heck der Gummiradwalze hat es sich dagegen herausgestellt, dass es ausreicht, wenn die Sichtausnehmung für die hintere Fahrwerkseinrichtung in Vorwärtsrichtung nach vorne durch eine vom Maschinenrahmen gebildete Seitenwand begrenzt und in Vorwärtsrichtung nach hinten dagegen offen ist. Die Sichtausnehmung für die hintere Fahrwerkseinrichtung ist also mit anderen Worten als Rücksprung des Maschinenrahmens ausgebildet, der sich bis zum Heck der Gummiradwalze fortsetzt. Der Maschinenrahmen der Gummiradwalze springt demnach in Vorwärtsrichtung hinter der Sichtausnehmung für die hintere Fahrwerkseinrichtung nicht mehr über diese hervor, sondern endet in einer Ebene mit der zur Maschinenmitte hin rückversetzten Innenwand der Sichtausnehmung. Die Sichtausnehmung für die hintere Fahrwerkseinrichtung ist daher besonders großzügig ausgebildet, sodass der Fahrer der Gummiradwalze die Radkante des äußeren hinteren Rades und dessen Lauffläche besonders gut einsehen kann.

Grundsätzlich könnten die Sichtausnehmungen irgendwo dort an den Rädern münden, wo die Radkanten und die Laufflächen sichtbar sind, beispielsweise im Bereich der in Vorwärtsrichtung hinten liegenden Laufflächen. Eine Nachverfolgung des Lenkeinschlages und eine damit verbundene verbesserte Kontrolle der Steuerung der Gummiradwalze gelingt allerdings dann besonders gut, wenn die vertikal obere Seite der Lauffläche der Räder, sprich diejenige Seite, die im Arbeitsbetrieb vom Boden abgewandt ist, durch den Bediener vom Fahrerstand aus einsehbar ist. Um dies zu gewährleisten, ist es bevorzugt, dass sich die Sichtausnehmungen durch den Maschinenrahmen bis vertikal über die Räder erstrecken. Die Sichtausnehmungen enden also beispielsweise im Radkasten in demjenigen Bereich oberhalb eines Rades, der dem Boden im Arbeitsbetrieb der Gummiradwalze abgewandt ist. Von hier aus lassen sich die Oberseiten der Räder, sprich ihre Laufflächen und ihre quer zur Vorwärtsrichtung außen liegenden Radkanten, am besten einsehen.

Gewöhnlich weisen Gummiradwalzen beziehungsweise deren Maschinenrahmen in Vorwärtsrichtung vor und/oder hinter dem Fahrerstand eine Haube, beispielsweise eine Motorhaube, und/oder einen Tank, beispielsweise einen Wassertank, auf. Diese Hauben können beispielsweise aufgeklappt beziehungsweise verschwenkt werden, sodass ein Zugang, beispielsweise für Wartungsarbeiten, zu im Maschinenrahmen angeordneten Komponenten der Gummiradwalze vorhanden ist. Wenn der Maschinenrahmen in Vorwärtsrichtung vor und/oder hinter dem Fahrerstand eine Haube aufweist, so ist es bevorzugt, dass sich die Sichtausnehmungen durch die Haube hindurch erstrecken. Die Kontur der Sichtausnehmungen beziehungsweise die Sichtausnehmungen an sich werden also nicht nur vom Maschinenrahmen selbst, sondern auch von den am Maschinenrahmen angeordneten Hauben gebildet bzw. deren Verlauf durch entsprechende Formgebung der Hauben fortgesetzt. Sämtliche Seiten- und Innenflächen der Sichtausnehmungen, die vom Maschinenrahmen gebildet werden, setzen sich also ebenso in der oder den Hauben fort. Auf diese Weise lässt sich die Erfindung einfach auch bei Gummiradwalzen mit derartigen Hauben realisieren. Ergänzend oder alternativ ist auch eine entsprechende Ausbildung weiterer Elemente, wie beispielsweise Tanks, möglich.

Eine weitere Möglichkeit, trotz der erfindungsgemäßen Sichtausnehmungen ausreichend Bauraum am Maschinenrahmen zur Verfügung zu stellen, besteht darin, eine der in Vorwärtsrichtung vorne und/oder hinten verlaufenden Seitenwände der jeweiligen Sichtausnehmungen, die durch den Maschinenrahmen gebildet werden, hinterschnitten auszubilden. Durch den Hinterschnitt verschmälert sich die Breite der Sichtausnehmung nach außen, wobei der Hinterschnitt erfindungsgemäß niemals einen vollständigen Verschluss der Sichtausnehmung zur Seite hin bewirkt. Mit anderen Worten ist die Sichtausnehmung derart ausgebildet, dass sie sich von der vertikalen Ebene der äußersten Außenkontur der Gummiradwalze zur Maschinenmitte hin vergrößert beziehungsweise verbreitert. In dieser bevorzugten Ausführungsform hinterschneidet wenigstens eine Sichtausnehmung, insbesondere beide Sichtausnehmungen für die vordere Fahrwerkseinrichtung, den Maschinenrahmen derart, dass die Sichtausnehmung zum Teil durch den Maschinenrahmen zur Seite begrenzt ausgebildet ist. Die Hinterschneidung beschreibt die Sichtausnehmung und insbesondere denjenigen Teil der Sichtausnehmung, der quer zur Vorwärtsrichtung nach außen hin von einem Überhang des Maschinenrahmens bedeckt beziehungsweise begrenzt ist. Ein solcher Hinterschnitt kann durch eine schräge Seitenwand oder durch ein zur Außenseite der Sichtausnehmung angebrachtes zusätzliches Element, beispielsweise ein Blech, ausgebildet sein.

Bei modernen Gummiradwalzen weisen die Fahrwerkseinrichtungen üblicherweise mehrere quer zur Vorwärtsrichtung voneinander beabstandete Räder auf, wobei die Räder der vorderen Fahrwerkseinrichtung gegenüber den Rädern der hinteren Fahrwerkseinrichtung quer zur Vorwärtsrichtung auf Lücke versetzt angeordnet sind. Mit anderen Worten sind die Räder der Fahrwerkseinrichtungen quer zur Vorwärtsrichtung derart versetzt angeordnet, dass der Boden der Fahrspur bei einmaliger Überfahrt der Gummiradwalze im Wesentlichen nur von einem Rad überfahren wird, wobei selbstverständlich zum Erzielen einer gleichmäßigen Verdichtung eine gewisse Überlappung der Fahrspuren vorgesehen ist. Werden die vorderen und hinteren Fahrwerkseinrichtungen bezüglich ihrer Drehachsen somit aufeinander projiziert, überlappen sich abwechselnd ein vorderes und ein hinteres Rad bzw. die vorderen Räder liegen im Wesentliche in einer Lücken zwischen zwei hinteren Rädern und umgekehrt. Eine derartige Anordnung der Räder der vorderen und der hinteren Fahrwerkseinrichtung führt automatisch dazu, dass auf einer Seite der Gummiradwalze ein Rad der hinteren Fahrwerkseinrichtung quer zur Vorwärtsrichtung weiter nach außen vorsteht als die Räder der vorderen Fahrwerkseinrichtung und umgekehrt. Es ist daher bevorzugt, dass die Sichtausnehmung für die hintere Fahrwerkseinrichtung auf diese Radkante, sprich die gegenüber der vorderen Radkante nach außen versetzte Radkante, gerichtet ist. Mit anderen Worten soll die Sichtausnehmung für die hintere Fahrwerkseinrichtung speziell auf derjenigen Längsseite der Gummiradwalze angeordnet sein, auf der die quer zur Vorwärtsrichtung äußerste Radkante der hinteren Fahrwerkseinrichtung über die quer zur Vorwärtsrichtung äußerste Radkante der vorderen Fahrwerkseinrichtung hervorsteht. Da diese Radkante der hinteren Fahrwerkseinrichtung eine äußere Kante der Fahrspur der gesamten Gummiradwalze definiert, ist diese von besonderer Bedeutung während des Arbeitsbetriebes, insbesondere für die exakte Lenkung der Gummiradwalze entlang einer vorgegebenen Fahrspur. Es ist daher von Vorteil wenn die Radkante dieses Rades zusätzlich zu den Radkanten der quer zur Vorwärtsrichtung äußeren Räder der vorderen Fahrwerkseinrichtung vom Fahrerstand aus während des Arbeitsbetriebes eingesehen werden kann.

Der Fahrerstand an sich sollte ebenfalls derart ausgebildet sein, dass dem Fahrer freie Sicht durch die Sichtausnehmungen ermöglicht ist. Zumeist sind die Fahrerstände von Gummiradwalzen mit einer Kabine ausgestattet, die ein Dach umfasst. Bei derartigen Gummiradwalzen weist der Fahrerstand das Dach tragende Tragholme auf. Diese ragen im Wesentlichen vertikal nach oben auf und sind aus einem undurchsichtigem Material, in der Regel Stahl, angefertigt. Um nun trotz dieser Tragholme dem Fahrer eine freie Sicht durch die Sichtausnehmungen zu gewähren, ist es bevorzugt, dass die Tragholme zumindest im Blickfeld des Fahrer zu den Sichtausnehmungen derart quer zur Vorwärtsrichtung zur Maschinenmitte hin versetzt angeordnet sind, dass die Sichtausnehmungen vom Fahrer der Gummiradwalze frei vom Fahrerstand aus einsehbar sind. Grundsätzlich wäre es ebenfalls möglich, die Tragholme quer zur Vorwärtsrichtung nach außen zu versetzen, sodass der Blick durch die Sichtausnehmungen freigegeben wird. Es ist allerdings erfindungsgemäß bevorzugt, wenn ein Versatz der Tragholme zur Maschinenmitte erfolgt, mit anderen Worten, die Tragholme also von der Außenkante der Gummiradwalze weg, insbesondere zur Mitte hin, versetzt sind. Auf diese Weise lässt sich sowohl eine sichere Befestigung der Fahrerkabine beziehungsweise des Daches der Fahrerkabine erzielen und gleichzeitig sicherstellen, dass die Tragholme nicht die Sicht des Fahrers von dem Fahrerstand aus beziehungsweise von dem Fahrersitz aus durch die Sichtausnehmungen hindurch blockieren.

Gummiradwalzen weisen auf ihrer vertikal oben liegenden Seite, sprich auf ihrer Oberseite, beziehungsweise derjenigen Seite, die im Arbeitsbetrieb dem zu verdichtenden Boden abgewandt ist, verschiedene Einrichtungen auf, die von einem Bediener beispielsweise zu Wartungszwecken erreicht werden müssen. So verfügen Gummiradwalzen zumeist über einen Wassertank, in dem Wasser zur Benetzung der Gummiräder mitgeführt wird. Der Tankdeckel für diesen Tank befindet sich oftmals auf der Oberseite der Gummiradwalze. Diese Einrichtungen an der vertikal oben liegenden Seite der Gummiradwalze sind oftmals relativ hoch angeordnet und daher schwer zugänglich. Die vorliegende Erfindung ermöglicht es nun, die Bedienung der Gummiradwalze auch bei Wartungsarbeiten zu erleichtern. In einer bevorzugten Ausführungsform der Erfindung ist es dafür vorgesehen, dass wenigstens eine Sichtausnehmung, insbesondere eine Sichtausnehmung für die vordere Fahrwerkseinrichtung, vertikal nach oben offen ausgebildet ist. Die Sichtausnehmung ist also zumindest teilweise nicht nach oben durch den Maschinenrahmen oder weitere vorspringende Teile der Gummiradwalze begrenzt. Mit anderen Worten bildet ein Teil der Sichtausnehmung eine nach oben offene Stufe beziehungsweise einen Rücksprung im Maschinenrahmen. Diese Stufe beziehungsweise der Rücksprung befindet sich insbesondere in einem Bereich, in dem auf der vertikal oberen Seite eine Einrichtung angeordnet ist, die hin und wieder von einem Bediener erreicht werden muss. Aufgrund der erfindungsgemäßen Stufe wird dem Bediener das Erreichen dieser Einrichtung erleichtert, da er sich, beispielsweise mit seinem Oberkörper, in die Stufe im Maschinenrahmen hineinlehnen kann, wodurch ein Übergreifen des Maschinenrahmens erleichtert wird. Der Bediener gelangt dadurch näher zur Maschinenmitte als bei herkömmlichen Formen des Maschinenrahmens. Auf diese Weise kann ein neben der Gummiradwalze stehender Bediener auch weit oben angeordnete Einrichtungen an der Gummiradwalze erreichen.

Dieser Effekt kann noch weiter verstärkt werden, indem beispielsweise im Bereich einer Sichtausnehmung, insbesondere im Bereich der vertikal nach oben offen ausgebildeten Sichtausnehmung, ein Aufstieg für einen Bediener vorgesehen ist. Der Aufstieg beschreibt insbesondere eine Trittplattform beziehungsweise eine Trittstufe, auf die ein Bediener zumindest einen oder sogar zwei Füße stellen kann. Der Aufstieg ist dabei mit einer gewissen Distanz zum Boden am Maschinenrahmen angeordnet, sodass der Bediener durch das Erklimmen des Aufstieges deutlich einfacher an vertikal oben an der Gummiradwalze angeordnete Einrichtungen gelangt. Ganz besonders hilfreich ist der Aufstieg dort, wo sich ebenfalls die vertikal nach oben offen ausgebildete Sichtausnehmung befindet. Zusammen mit der vertikal nach oben offen ausgebildeten Sichtausnehmung erleichtert der Aufstieg das Erreichen von weit oben angeordneten Einrichtungen der Gummiradwalze erheblich.

Das Erreichen von erhöht angeordneten Einrichtungen an der Gummiradwalze kann in einer weiteren Ausführungsform dadurch noch weiter erleichtert werden, dass zusätzlich zur Sichtausnehmung, insbesondere vertikal über dem Aufstieg, eine Aufstiegsausnehmung im Maschinenrahmen ausgebildet ist, die bevorzugt in die Sichtausnehmung hinein geöffnet ausgebildet ist. Die Aufstiegsausnehmung ist ebenfalls als Rücksprung im Maschinenrahmen ausgebildet und erstreckt sich bevorzugt vom vertikal unteren Ende der Gummiradwalze bzw. vom Aufstieg aus über die gesamte Höhe der Gummiradwalze vertikal nach oben. Ganz besonders vorteilhaft gelingt diese Ausführungsform, wenn sich die Aufstiegsausnehmung, insbesondere im vertikal oberen Bereich der Gummiradwalze, mit der Sichtausnehmung verbindet, wodurch ein gewisser Bereich der Sichtausnehmung bzw. der Aufstiegsausnehmung sowohl für den Aufstieg eines Bedieners als auch für die Sicht des Fahrers auf die Räder genutzt wird. Aufgrund dieser Doppelnutzung ein und derselben Ausnehmung im Maschinenrahmen wird der Bauraum des Maschinenrahmens auch nur einmal und damit geringer beschränkt, als wenn die beiden Ausnehmungen getrennt voneinander im Maschinenrahmen ausgeführt wären. Die Aufstiegsausnehmung ist derart ausgebildet, dass ein Bediener, der entweder neben der Gummiradwalze steht oder sich auf dem Aufstieg befindet, mit seinem Köper in die Aufstiegsausnehmung eintreten kann und somit weiter über die Außenkontur der Maschine hinweg zur Maschinenmitte gelangt. Auf diese Weise kann der Bediener aus der Position in der Aufstiegsausnehmung schwer erreichbare, beispielsweise vertikal oben angeordnete, Einrichtungen an der Gummiradwalze deutlich einfacher erreichen, als wenn er lediglich neben der Gummiradwalze, insbesondere außerhalb ihrer Außenkontur, steht. Eine ganz besonders vorteilhafte Zugänglichkeit dieser Einrichtungen wird dadurch erreicht, dass eine vertikal nach oben offen ausgebildete Sichtausnehmung mit einem Aufstieg und einer Aufstiegsausnehmung in einer ganz besonders bevorzugten Ausführungsform der Erfindung kombiniert wird. Auf diese Weise wird die Bedienung der Gummiradwalze insbesondere während Wartungsarbeiten deutlich vereinfacht.

Bevorzugt ist in der wenigstens einen Sichtausnehmung für die vordere Fahrwerkseinrichtung ein Zugangsdeckel, insbesondere für einen Betriebsfluidtank oder einen Ballasttank, angeordnet. Diese Anordnungsstelle ist einerseits gut von außerhalb der Gummiradwalze zu erreichen und hat andererseits den Vorteil, dass sie nicht erhaben über die Außenseite der Maschine vorsteht. Typische Betriebsfluide können beispielsweise Wasser, Öl oder sonstige Betriebsfluide sein. Besonders vorteilhaft ist ergänzend oder alternativ die Anordnung eines Zugangs zu einer Ballasteinrichtung an dieser Stelle. Dies kann ein Ballastraum für Sand oder sonstige Ballastmaterialien sein. Bevorzugt handelt es sich um einen Ballasttank für Wasser.

Um Gummiradwalzen auf Baustellen auch in beengten Verhältnissen einsetzen zu können, werden diese häufig mittels eines Krans aufgehängt und von diesem versetzt. Um eine derartige Aufhängung zu ermöglichen, müssen an der Gummiradwalze Befestigungsmittel für den Kran vorgesehen sein. Um eine ausbalancierte Aufhängung zu erreichen, müssen die Befestigungsmittel für den Kran typischerweise in denjenigen Bereichen der Gummiradwalze liegen, in denen erfindungsgemäß die Sichtausnehmungen angeordnet sind. Es gilt daher zum einen entsprechende Befestigungsmittel bereitzustellen und zum anderen die Sicht des Bedieners der Gummiradwalze durch die Sichtausnehmungen nicht durch die Befestigungsmittel einzuschränken. Es ist daher bevorzugt, dass in den vom Maschinenrahmen gebildeten Seitenwänden der Sichtausnehmungen integrierte Transportösen zur Aufhängung der Gummiradwalze angeordnet sind. Aus Balancegründen ist es weiterhin vorteilhaft, wenn die Transportösen möglichst weit von der Maschinenmitte entfernt, sprich an der Außenkontur der Gummiradwalze ausgebildet sind. Die Transportösen sind daher bevorzugt am Übergang der Seitenwände der Sichtausnehmungen zur Außenkontur der Gummiradwalze angeordnet. Insbesondere sind die Transportösen als einstückige Teile mit dem Maschinenrahmen ausgebildet.

Im Folgenden wird die Erfindung anhand des in den Figuren gezeigten Ausführungsbeispiels näher beschrieben. Es zeigen schematisch:
Figur 1 eine Seitenansicht einer Gummiradwalze;
Figur 2 eine Draufsicht auf die Gummiradwalze aus Fig. 1;
Figur 3 den Versatz zwischen den vorderen und hinteren Fahrwerkseinheiten der Gummiradwalze;
Figur 4 eine Seitenansicht einer Sichtausnehmung für die vordere Fahrwerkseinrichtung;
Figur 5 eine Draufsicht einer Sichtausnehmung für die vordere Fahrwerkseinrichtung;
Figur 6 eine Seitenansicht einer Sichtausnehmung für die hintere Fahrwerkseinrichtung;
Figur 7 eine Draufsicht einer Sichtausnehmung für die hintere Fahrwerkseinrichtung;
Figur 8 eine perspektivische Ansicht der Gummiradwalze von vorne links;
Figur 9 eine perspektivische Ansicht der Gummiradwalze von vorne rechts;
Figur 10 eine Vorderansicht einer Gummiradwalze von schräg oben; und
Figur 11 eine Rückansicht einer Gummiradwalze von schräg oben.

Gleiche und gleichwirkende Bauteile sind mit gleichen Bezugszeichen bezeichnet. Sich wiederholende Bauteile sind nicht in jeder Figur gesondert bezeichnet.

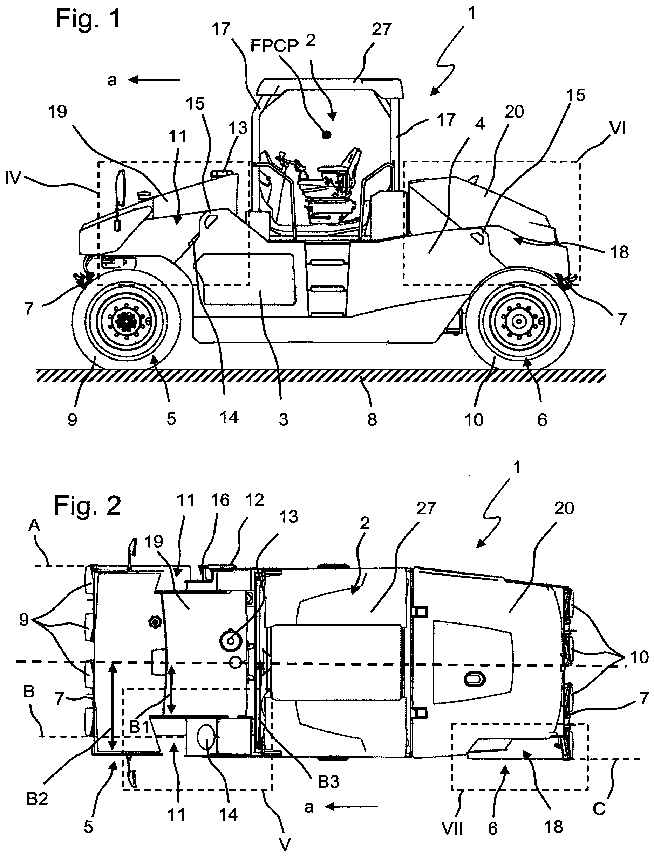

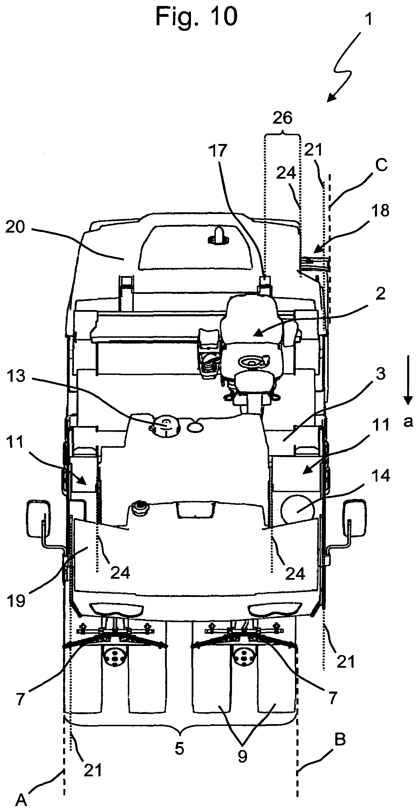

Die Figuren 1 bis 11 zeigen ein bevorzugtes erfindungsgemäßes Ausführungsbeispiel einer Gummiradwalze 1. Gummiradwalzen 1 weisen allgemein einen Fahrerstand 2 und einen Maschinenrahmen 3 auf. Im Arbeitsbetrieb werden die Gummiradwalzen 1 von einem Antriebsaggregat 4, zumeist einem Dieselverbrennungsmotor, angetrieben und bewegen sich mittels einer angetriebenen vorderen Fahrwerkseinrichtung 5 und einer hinteren Fahrwerkseinrichtung 6 alternierend in und entgegen der Vorwärtsrichtung a über den Boden 8. Die Fahrwerkseinrichtungen 5 und 6 umfassen jeweils vier nebeneinander angeordnete Einzelräder. Im Fahrstand 2 ist ein idealerweise über die Breite seitenverstellbarer Fahrersitz angeordnet. in Fig. 1 ist beispielhaft die ungefähre Lage des FPCP gemäß DIN ISO 5006:2017 angegeben.

Um dem Fahrer der Gummiradwalze 1 die Steuerung der Maschine zu vereinfachen, weist die gezeigte Ausführungsform der Gummiradwalze 1 jeweils zwei Sichtausnehmungen 11 für die vordere Fahrwerkseinheit 5 auf. Genauer weist der Maschinenrahmen 3 der Gummiradwalze 1 eine Sichtausnehmung 11 auf, durch die der Fahrer vom Fahrerstand 2 der Gummiradwalze 1 aus das rechts außen liegende Rad 9, insbesondere dessen quer zur Vorwärtsrichtung a außen liegende Radkante A und dessen Lauffläche, einsehen kann. Darüber hinaus weist der Maschinenrahmen 3 der Gummiradwalze 1 eine weitere Sichtausnehmung 11 auf, durch die das äußere, links vorne angeordnete Rad 9 der vorderen Fahrwerkseinrichtung 5 vom Fahrerstand 2 aus einsehbar ist. Auch hier ist insbesondere die Radkante B, die quer zur Vorwärtsrichtung a vorne links außen liegt, und die Lauffläche des links vorne außen liegenden Rades 9 für den Fahrer vom Fahrerstand 2 aus sichtbar. Die Sichtausnehmungen 11 für die vordere Fahrwerkseinrichtung 5 liegen, wie insbesondere aus Figur 2 hervorgeht, auf den gegenüberliegenden Längsseiten des Maschinenrahmens 3 der Gummiradwalze 1 und im Wesentlichen auf derselben Höhe in Längsrichtung bzw. Vorwärtsrichtung a der Gummiradwalze 1.

Darüber hinaus weist die Gummiradwalze 1 eine dritte Sichtausnehmung 18 für die hintere Fahrwerkseinrichtung 6 auf. Durch die Sichtausnehmung 18 hindurch ist für den Fahrer vom Fahrerstand 2 aus die Lauffläche und die Radkante C des hinten links außen liegenden Rades 10 sichtbar. Die durch die Sichtausnehmungen 11, 18 einsehbaren Radkanten A, B, C sind also diejenigen Radkanten, die quer zur Vorwärtsrichtung a am weitesten von der Maschinenmitte der Gummiradwalze 1 entfernt liegen. Dadurch, dass der Fahrer der Gummiradwalze 1 diese Radkanten A, B, C im Arbeitsbetrieb einsehen kann, lässt sich die Gummiradwalze 1 besonders einfach steuern. Darüber hinaus kann über die Sichtausnehmungen 11, 18 ebenfalls die Lauffläche der jeweiligen Räder 9, 10 eingesehen werden, wodurch der Fahrer der Gummiradwalze 1 feststellen kann, ob Bodenmaterial, insbesondere beispielsweise Asphalt, an den Laufflächen der Räder 9, 10 hängenbleibt. Für den Fall, dass tatsächlich Material an den Laufflächen anhaftet, sind Abstreifer 7 vorgesehen, die die Laufflächen zumindest teilweise von anhaftendem Material befreien können.

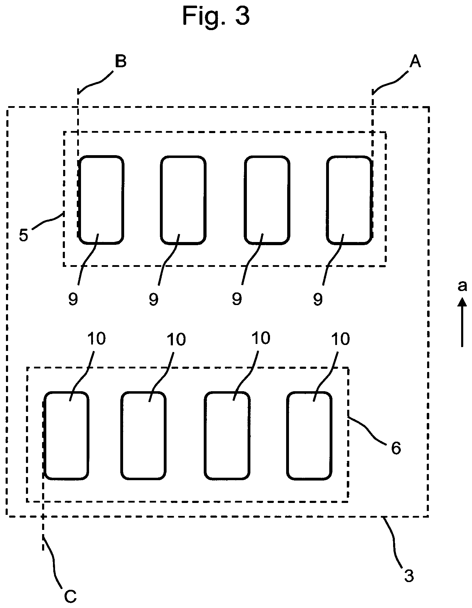

Insgesamt können also drei äußere Radkanten A, B, C und teilweise Laufflächen der jeweiligen Gummiräder durch die genau drei Sichtausnehmungen 11, 18 vom Fahrer vom Fahrerstand 2 aus eingesehen werden. Die Auswahl der drei Radkanten A, B, C aus allen vier theoretisch möglichen Radkanten wird anhand von Figur 3 näher erläutert. Figur 3 zeigt schematisch die Relativposition der vorderen Räder9 der vorderen Fahrwerkseinrichtung 5 gegenüber den hinteren Rädern 10 der hinteren Fahrwerkseinrichtung 6 in einer Draufsicht. Im gezeigten Ausführungsbeispiel umfasst die vordere Fahrwerkseinrichtung 5 vier vordere Räder 9 und die hintere Fahrwerkseinrichtung 6 vier hintere Räder 10. Die vorderen Räder 9 und die hinteren Räder 10 sind jeweils quer zur Vorwärtsrichtung a voneinander beabstandet. Die vorderen Räder 9 sind quer zur Vorwärtsrichtung a gegenüber den hinteren Rädern 10 auf Lücke angeordnet. Dies bedeutet, dass die vorderen Räder 9 gegenüber den hinteren Rädern 10 quer zur Vorwärtsrichtung a derart versetzt angeordnet sind, dass sich die Fahrspuren der einzelnen Räder nur jeweils an den Rändern überlappen und der Boden 8 bei einmaliger Überfahrt der Gummiradwalze 1 im Wesentlichen jeweils nur von einem Rad 9, 10, entweder der vorderen Fahrwerkseinrichtung 5 oder der hinteren Fahrwerkseinrichtung 6, überfahren wird. Da die Gummiradwalze 1 typischerweise über die vordere Fahrwerkseinrichtung 5 gelenkt wird, sind die quer zur Vorwärtsrichtung a außen angeordneten Radkanten A, B von besonderer Wichtigkeit für eine präzise Steuerung und Lenkung der Gummiradwalze 1. Darüber hinaus ragt aufgrund der quer zur Vorwärtsrichtung a gegenüber den vorderen Rädern 9 versetzten hinteren Räder 10 die Radkante C des hinteren linken Rades 10 quer zur Vorwärtsrichtung a weiter nach außen vor als die vorne links außenliegende Radkante B des vorne links außen liegenden vorderen Rades 9. Es handelt sich hierbei um die Radkante C desjenigen Rades 10, dass an der hinteren Fahrwerkseinrichtung 6 quer zur Vorwärtsrichtung a am weitesten außen liegt und damit die gesamte Fahrspur der gesamten Gummiradwalze 1 hinten links außen abschließt. Daher ist die Radkante C der hinteren Fahrwerkeinrichtung 6 ebenfalls von besonderer Bedeutung zur Lenkung der Gummiradwalze 1, insbesondere zur Steuerung der Gummiradwalze 1 entlang einer vorgegebenen Fahrspur und/oder entlang von Hindernissen. Die vierte Radkante hinten rechts dagegen ist gegenüber der vorderen rechts außen befindlichen Radkante A quer zur Vorwärtsrichtung a zur Maschinenmitte hin versetzt und liegt damit automatisch immer innerhalb der gesamten Fahrspur der Gummiradwalze 1. Diese Radkante ist daher von untergeordneter Wichtigkeit für die Steuerung bzw. Lenkung der Gummiradwalze 1 und muss nicht zwingend durch eine Sichtausnehmung einsehbar sein. Die bevorzugten Ausführungsformen der Erfindung beschränken sich daher auf genau drei Sichtausnehmungen 11, 18, durch die die spezifischen Radkanten A, B, C sichtbar sind.

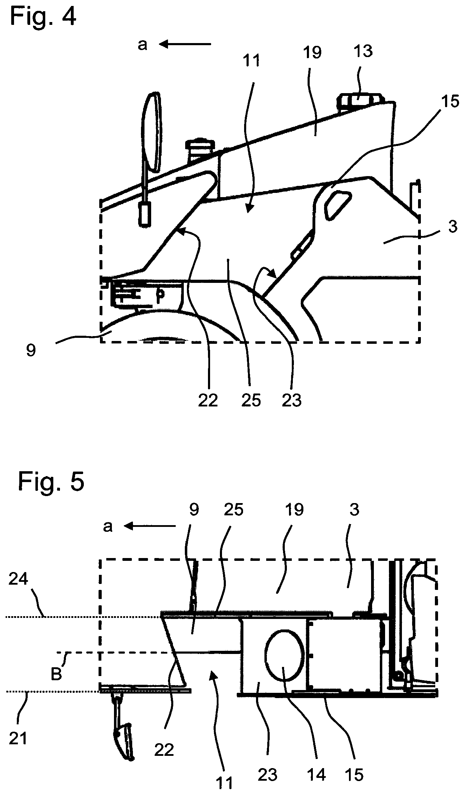

Die Figuren 4 und 5 zeigen eine Sichtausnehmung 11 für die vordere Fahrwerkseinrichtung 5 gemäß den in den Figuren 1 und 2 angegebenen Kästen IV und V im Detail. Die zweite Sichtausnehmung 11 in Vorwärtsrichtung a vorne rechts ist im Wesentlichen identisch mit der gezeigten Sichtausnehmung 11 ausgebildet, so dass die nachstehenden Ausführungen ebenfalls für die zweite Sichtausnehmung 11 in Vorwärtsrichtung a vorne rechts an der Gummiradwalze 1 gelten. Figur 4 zeigt die Sichtausnehmung 11 in einer Seitenansicht, Figur 5 in Draufsicht. Die Sichtausnehmung 11 wird vom Maschinenrahmen 3 gebildet. Insbesondere ist die Sichtausnehmung 11 als Rücksprung im Maschinenrahmen 3 ausgebildet. Sie verläuft durchgehend von den Rädern 9 bis zum Fahrerstand 2. Die Sichtausnehmung 11 mündet vertikal über den Rädern 9, insbesondere im Radkasten der Räder 9. Dass die Sichtausnehmung 11 bis zum Fahrerstand 2 durchgehend verläuft, heißt, dass sich in einer gedachten Verlängerung der Sichtausnehmung 11 zum Fahrerstand 2 hin, insbesondere entlang der Blickrichtung eines sich im Fahrerstand 2 befindlichen Fahrers (dort FPCP), kein Hindernis befindet, das die Sicht des Fahrers aus dem Fahrerstand 2 durch die Sichtausnehmung 11 auf die Räder 9 behindert. Die Sichtausnehmung 11 bildet also einen Freiraum zwischen dem Fahrerstand 2 und den Rädern 9, durch den hindurch der Fahrer vom Fahrerstand 2 aus die Räder 9 sehen kann. Dazu muss der Fahrerstand 2 nicht in Verlängerung der Sichtausnehmung 11 geöffnet sein, sondern es reicht, dass der Fahrer aus dem Fahrerstand 2 durch die Sichtausnehmung 11 hindurchblicken kann, beispielsweise durch ein Fenster beziehungsweise die Frontscheibe oder die Heckscheibe des Fahrerstandes 2. Die Sichtausnehmung 11 weist eine in Vorwärtsrichtung a vorne liegende vordere Seitenwand 22 und eine in Vorwärtsrichtung a hinten liegende hintere Seitenwand 23 auf. Darüber hinaus wird die Sichtausnehmung 11 zur Maschinenmitte hin quer zur Vorwärtsrichtung a von einer Innenwand 25 begrenzt. Gegenüber der Innenwand 25 ist die Sichtausnehmung 11 zur Außenumgebung hin geöffnet, insbesondere über ihren gesamten Verlauf hinweg. Die vordere Seitenwand 22, die hintere Seitenwand 23 und die Innenwand 25 werden jeweils vom Maschinenrahmen 3 gebildet bzw. sind Teil des Maschinenrahmens 3. Die vordere Seitenwand 22 und die hintere Seitenwand 23 verlaufen in Richtung bzw. parallel zur Blickrichtung des Fahrers vom Fahrerstand 2 aus, wenn er beispielsweise auf dem Fahrersitz sitzend auf die Räder 9, die durch die Sichtausnehmung 11 einsehbar sind, blickt. Insbesondere verlaufen die vordere Seitenwand 22 und die hintere Seitenwand 23 ebenfalls parallel zueinander, wie in Figur 4 gezeigt.

Wie in Figur 5 gezeigt, verlaufen die Seitenwände 22, 23 der Sichtausnehmung 11 von einer Maschinenrahmenaußenkante 21 zu einer durch die Innenwand 25 gebildeten Maschinenrahmeninnenkante 24. Die Maschinenrahmeninnenkante 24 und die Maschinenrahmenaußenkante 21 verlaufen im Wesentlichen parallel zur Vorwärtsrichtung a und parallel zueinander. Die Maschinenrahmenaußenkante 21 stellt die quer zur Vorwärtsrichtung a am weitesten außen liegende Grenze des Maschinenrahmens 3 dar. Mit anderen Worten ist der Maschinenrahmen 3 an seiner Maschinenrahmenaußenkante 21 am weitersten von der Maschinenmitte, insbesondere quer zur Vorwärtsrichtung a, entfernt. Der Abstand zwischen der Maschinenrahmenaußenkante 21 und der Maschinenrahmeninnenkante 24 ist die Tiefe der Sichtausnehmung 11. Die Tiefe der Sichtausnehmung 11 wird im Wesentlichen durch die Erstreckung der Seitenwände 22, 23 quer zur Vorwärtsrichtung a bestimmt. Die vordere Seitenwand 22 und die hintere Seitenwand 23 können im Wesentlichen quer zur Vorwärtsrichtung a verlaufen. Wie aus den Figuren 4 und 5 hervorgeht, verläuft beispielsweise die hintere Seitenwand 23 entlang der Blickrichtung des Fahrers und im Wesentlichen quer zur Vorwärtsrichtung a. Die vordere Seitenwand 22 dagegen verläuft, wie insbesondere aus Figur 5 hervorgeht, nicht nur quer zur Vorwärtsrichtung a, sondern auch in Richtung zur Maschinenmitte hin und in Vorwärtsrichtung a. Die Seitenwände 22, 23 verlaufen dabei von der Maschinenrahmenaußenkante 21 zur Maschinenrahmeninnenkante 24, die im Wesentlichen von der Innenwand 25 gebildet wird. Wie aus der Figur 5 hervorgeht, verläuft die vordere Seitenwand 22 derart schräg zwischen der Maschinenrahmenaußenkante 21 und der Maschinenrahmeninnenkante 24, dass die Sichtausnehmung 11 von der Maschinenrahmenaußenkante 21 zur Maschinenrahmeninnenkante 24 bzw. von der Außenseite der Gummiradwalze 1 in Richtung zur Maschinenmitte hin sich verbreiternd ausgebildet ist. Durch den quer zur Vorwärtsrichtung a und in Vorwärtsrichtung a ausgerichteten Verlauf der vorderen Seitenwand 22 entsteht im Bereich der Sichtausnehmung 11 ein Überhang des Maschinenrahmens 3, der derart ausgebildet ist, dass die Sichtausnehmung 11 zumindest teilweise auch quer zur Vorwärtsrichtung a von der Maschinenmitte weg durch den Maschinenrahmen 3 begrenzt ist. Die Begrenzung ist also mit anderen Worten im Bereich gegenüber der Innenwand 25 angeordnet. Zu beachten ist allerdings, dass diese Begrenzung die der Innenwand 25 gegenüberliegende Öffnung der Sichtausnehmung 11 zur Außenumgebung nicht verschließt. Aufgrund dieser speziellen Anordnung des Maschinenrahmens 3 im Bereich der Sichtausnehmung 11 wird Bauraum eingespart und gleichzeitig eine optisch ansprechende Ausführung der Sichtausnehmung 11 erreicht.

Wichtig ist somit, dass die Breite B der Gummiradwalze in einer virtuellen horizontalen Referenzebene quer zur Fahrtrichtung a im Bereich der Sichtausnehmung 11 kleiner ist (Breite B1) als in Fahrtrichtung a vor (Breite B2) und hinter (Breite B3) dieser Sicherausnehmung 11. Die Sichtausnehmung stellt somit keine nach vorn oder hinten auslaufende zulaufende Verjüngung der Maschine dar, wie es beispielsweise bei der nachstehend noch näher beschriebenen Seitenaussparung 18 der Fall ist. Die Sichtausnehmung 18 hat vielmehr eine in Fahrtrichtung vordere und eine in Fahrtrichtung hintere Begrenzungswand, die zumindest schräg zur Fahrtrichtung verlaufen. Damit wird die Maschine hinsichtlich ihrer horizontalen Breite in Fahrtrichtung gesehen über die Sichtausnehmung 11 hinweg somit ausgehend von einer Ausgangsbreite im Bereich der Sichtausnehmung schmäler und anschließend wieder breiter, vorliegend bis nahezu hin zur Ausgangsbreite.

Fig. 2 verdeutlicht in diesem Zusammenhang ferner, dass die Sichtausnehmung von der maximalen Seitenaußenwanderstreckung soweit zur Maschinenmitte hin zurückspringt, dass über die Hälfte und insbesondere über zwei Drittel der laufflächenbreite des außen rechts liegenden Gummirades sichtbar ist.

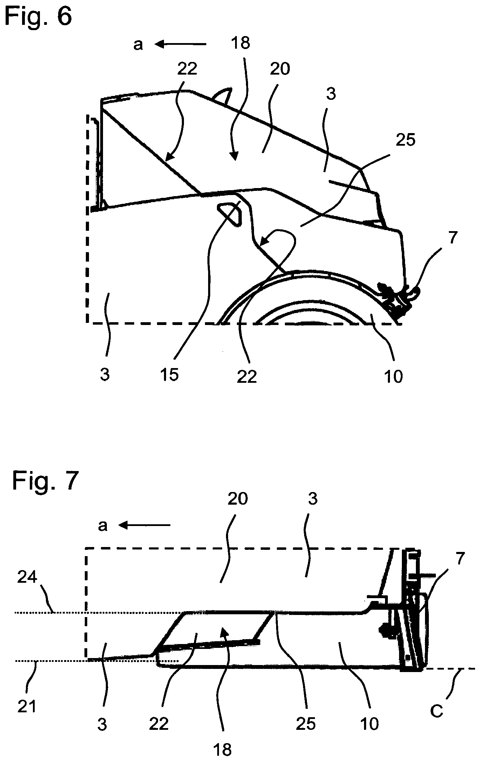

Die Figuren 6 und 7 zeigen eine Seitenansicht und eine Draufsicht auf die Sichtausnehmung 18 der Gummiradwalzen 1 gemäß den in den Figuren 1 und 2 angegebenen Kästen VI und VII. Die Ausführungen zur Sichtausnehmung 11 gemäß den Figuren 4 und 5 gelten für die Sichtausnehmung 18 in übertragener Weise, so dass nachstehend hauptsächlich auf die Unterschiede der Sichtausnehmung 18 zur Sichtausnehmung 11 eingegangen wird. Die Sichtausnehmung 18 befindet sich, ebenfalls wie die Sichtausnehmung 11, zwischen einer Maschinenrahmenaußenkante 21 und einer Maschinenrahmeninnenkante 24. Die Sichtausnehmung 18 für die hintere Fahrwerkseinrichtung 6 weist ebenfalls eine Innenwand 25 und eine vordere Seitenwand 22 auf, die beide vom Maschinenrahmen 3 gebildet werden. Die Sichtausnehmung 18 hat, im Gegensatz zur Sichtausnehmung 11, keine hintere Seitenwand 23, sondern ist in Vorwärtsrichtung a nach hinten offen ausgebildet. Das bedeutet, dass der Maschinenrahmen 3 in Vorwärtsrichtung a nach hinten insbesondere im vertikal oben angeordneten Bereich, in dem Niveau der Maschinenrahmeninnenkante 24 endet. Die vordere Seitenwand 22 der Sichtausnehmung 18 verläuft von der Maschinenrahmenaußenkante 21 zur Maschinenrahmeninnenkante 24, und zwar insbesondere derart, dass sich die vordere Seitenwand 22 von der Maschinenrahmenaußenkante 21 quer zur Vorwärtsrichtung a und entgegen der Vorwärtsrichtung a zur Maschinenrahmeninnenkante 24 erstreckt. Auf diese Weise bildet sich an der Sichtausnehmung 18 kein Überhang des Maschinenrahmens 3, wobei dennoch Bauraum eingespart wird. Wie insbesondere aus Figur 1 hervorgeht, schließt die vordere Seitenwand 22 zu einer Senkrechten denselben Winkel ein, wie die hintere Seitenwand 23 und die vordere Seitenwand 22 der Sichtausnehmungen 11 für die vordere Fahrwerkseinrichtung 5. Insbesondere entsprechen sich die Beträge der jeweiligen Winkel der Seitenwände 22, 23 gegenüber einer Senkrechten, wohingegen der Verlauf der Seitenwände 22, 23 der in Vorwärtsrichtung a vorderen Sichtausnehmungen 11 und damit auch deren Winkel zur Senkrechten gespiegelt gegenüber dem Verlauf und dem Winkel zur Senkrechten der in Vorwärtsrichtung a hinteren Sichtausnehmung 18 ist.

Der Maschinenrahmen 3 der Gummiradwalzen 1 schließt eine in Vorwärtsrichtung a vordere Haube 19 und eine in Vorwärtsrichtung a hintere Haube 20 ein. Die vordere Haube 19 und die hintere Haube 20 sind beispielsweise als verschwenkbare Hauben 19, 20 ausgebildet, die um eine Schwenkachse weggeklappt werden können, um im Maschinenrahmen 3 gelagerte Einrichtungen für Wartungszwecke zugänglich zu machen. Wie insbesondere aus Figur 2 und den Figuren 10 und 11 hervorgeht, setzen sich die Sichtausnehmungen 11, 18 in den Hauben 19, 20 fort. Insbesondere ist der Maschinerahmen 3 bzw. dessen Hauben 19, 20 der Gummiradwalzen 1 derart ausgebildet, dass sich die vordere Seitenwand 22, die hintere Seitenwand 23 und die Innenwand 25 der Sichtausnehmungen 11, 18 in den Hauben 19, 20 fortsetzen, ohne dass es hierbei zu einer Änderung des Querschnitts bzw. des Querschnittsverlaufes der Sichtausnehmungen 11, 18 in Blickrichtung des Fahrers kommt. Auch die Hauben 19, 20 sind also derart ausgebildet, dass ein Bediener vom Fahrerstand 2 der Gummiradwalzen 1 aus ungehindert durch die Sichtausnehmungen 11, 18 auf die Räder 9, 10 bzw. deren Radkanten A, B, C und Laufflächen blicken kann.

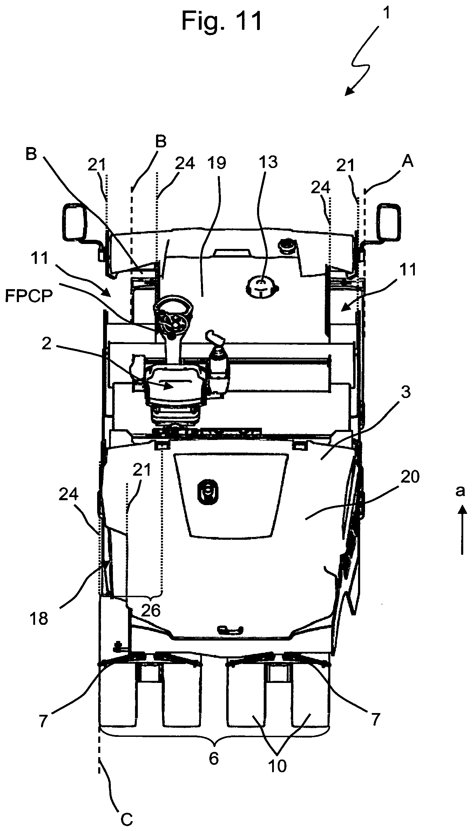

Insbesondere Fig. 11, in der die Draufsicht auf die Maschine derart gekippt ist, dass der Sehstrahl des im Fahrersitz sitzenden Bedieners bzw. von FPCP aus in einem sehr steilen Winkel zur Bildebene verläuft, verdeutlicht, dass durch die Sichtausnehmung vom FPCP aus eine Einsichtnahme des Bodens B über das jeweilige Gummirad hinweg möglich ist. Damit kann der Fahrer vom Fahrersitz aus besonders den unmittelbar vor der Gummiradwalze liegenden Bereich einsehen, was beispielsweise das Rangieren erleichtert.

Aus den Figuren 1, 2, 8 und 9 geht hervor, dass die Gummiradwalzen 1 ein Dach 27 für ihren Fahrerstand 2 aufweisen. Das Dach 27 wird von Tragholmen 17 getragen, die das Dach 27 mit dem Maschinenrahmen 3 verbinden. Um die Sicht des Fahrers vom Fahrerstand 2 aus durch die Sichtausnehmungen 11, 18, insbesondere durch die Sichtausnehmung 18, zu verbessern, ist beispielsweise der Tragholm 17, der sich auf der Seite der Sichtausnehmung 18 der Gummiradwalze 1 befindet, also hinten links, zur Maschinenmitte hin versetzt angeordnet. Anstatt also den Tragholm 17 im Wesentlichen an der Maschinenrahmenaußenkante 21 anzuordnen, wie im Stand der Technik üblich, ist der entsprechende Tragholm 17 von der Maschinenrahmenaußenkante 21 zur Maschinenmitte hin, quer zur Vorwärtsrichtung a, um den Abstand 26 versetzt. Der Abstand 26 zwischen der Maschinenrahmenaußenkante 21 und der Position des Tragholms 17 ist derart gewählt, dass der Bediener vom Fahrerstand 2 aus bzw. von einer Position auf dem Fahrersitz sitzend, durch die Sichtausnehmung 18 hindurch das hintere Rad 10 bzw. die Radkante C des hinteren Rades 10 der hinteren Fahrwerkseinrichtung 6 einsehen kann. Ein derartiger Versatz des Tragholmes 17 des Daches 27 bietet sich insbesondere in Vorwärtsrichtung a hinten am Fahrerstand 2 an, da in Vorwärtsrichtung a nach vorne eine möglichst freie Sicht des Fahrers durch die Frontscheibe des Fahrerstandes 2 gewährleistet sein muss. Will der Fahrer vom Fahrerstand 2 aus das linke hintere Rad 10 beobachten, so dreht er sich ganz natürlich über seine linke Seite bzw. sieht er über seine linke Schulter, so dass ein Versatz des Tragholmes 17 auf dieser Seite von der Maschinenrahmenaußenkante 21 zur Maschinenmitte um den Abstand 26 für freie Sicht durch die Sichtausnehmung 18 sorgt.

Aus unter anderem den Figuren 2, 8 und 10 ergibt sich, dass ein Deckel 14 in wenigstens einer der Sichtausnehmungen 11 angeordnet ist. Über diesen Deckel 14 ist im vorliegenden Ausführungsbeispiel ein Zugang zu einem Ballastraum, insbesondere einem Ballasttank für Wasser, möglich. Die Platzierung innerhalb der Sichtausnehmung 11 ist einerseits platzsparend und andererseits ermöglicht sie einen guten Zugang von außerhalb der Gummiradwalze 1, beispielsweise zur Befüllung des Ballasttanks.

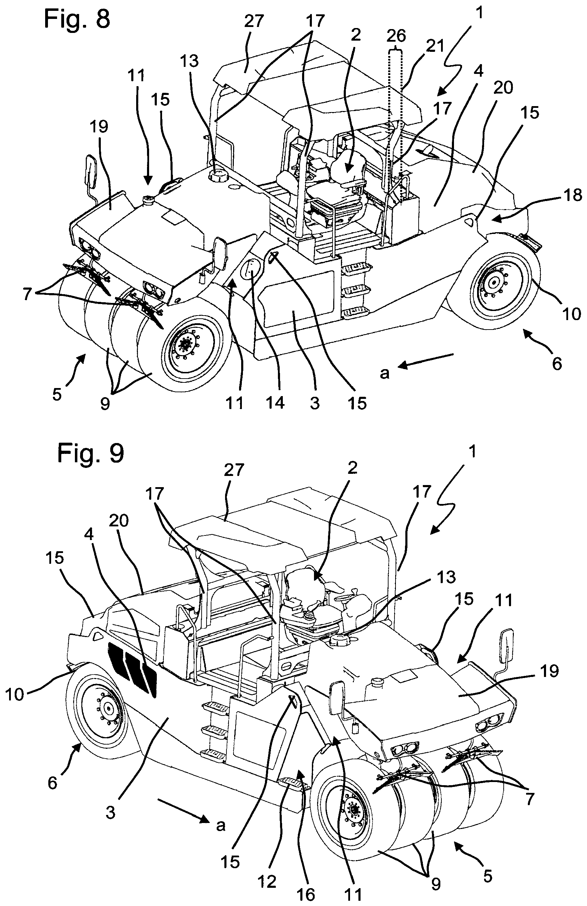

Wie beispielsweise aus Figur 2 hervorgeht, sind die Sichtausnehmungen 11, 18 vertikal nach oben, sprich auf der bodenabgewandten Seite bzw. vom Boden weg, offen ausgebildet. Dies bedeutet, dass der Maschinenrahmen 3 der Gummiradwalzen 1 im Bereich der Sichtausnehmungen 11, 18 an seiner oberen Kante weiter Richtung Maschinenmitte zurückspringt als dies ohne die Ausbildung der Sichtausnehmungen 11, 18 der Fall wäre. Auf diese Weise fällt es einem Bediener einfacher, auf der Oberseite der Gummiradwalze 1 bzw. auf einer der Hauben 19, 20 angeordnete Einrichtungen, wie beispielsweise den Wassertankdeckel 13, zu erreichen, da der Bediener sich an die Gummiradwalze 1 anlehnen kann und dabei durch die nach oben offen ausgebildete Sichtausnehmung 11, 18 näher mit seinem Körper zur Maschinenmitte der Gummiradwalze 1 kommt. Auf diese Weise können auch kleinere Bediener problemlos vertikal weiter oben angeordnete Einrichtungen an der Gummiradwalze 1 erreichen. Besonders vorteilhaft gelingt dies beispielsweise in der Ausführungsform einer Gummiradwalze 1 gemäß Figur 9. Hier ist an der Sichtausnehmung 11 vorne rechts ein Aufstieg 12 angeordnet, der sich vertikal unter der Sichtausnehmung 11 befindet. Der Aufstieg 12 ist hier als Trittstufe bzw. Trittplattform ausgebildet, auf die sich ein Bediener stellen kann, wenn er Einrichtungen im oberen Bereich der Gummiradwalze 1 erreichen möchte. Weiter vereinfacht wird dies durch die ebenfalls in Figur 9 gezeigte Aufstiegsausnehmung 16, die ebenfalls vom Maschinenrahmen 3 gebildet wird und vom Aufstieg 12 im Wesentlichen vertikal nach oben, sprich vom Boden 8 weg, und im gezeigten Ausführungsbeispiel ebenfalls in Richtung zur Sichtausnehmung 11 hin erstreckt. Die Aufstiegsausnehmung 16 ist an einer Sichtausnehmung 11, 18, und insbesondere vertikal unter der Sichtausnehmung 18, 19, angeordnet. Die Aufstiegsausnehmung 16 vereint sich mit der Sichtausnehmung 11, die vertikal nach oben hin offen ausgebildet ist. Auf diese Weise entsteht eine vom Aufstieg 12 vertikal nach oben bzw. vom Boden weg durchgehende Ausnehmung im Maschinenrahmen 3, die teilweise durch die Aufstiegsausnehmung 16 und teilweise durch die Sichtausnehmung 11 verläuft. In diese Ausnehmung kann ein Bediener nun einsteigen, bzw. sich in diese hinein bewegen, wenn er sich auf den Aufstieg 12 stellt. Aufgrund der kombinierten Ausnehmung kann der Bediener ein gutes Stück weiter zur Maschinenmitte hin vordringen und erreicht daher deutlich erleichtert auch vertikal weit oben und zur Maschinenmitte hin versetzte Einrichtungen der Gummiradwalze 1, die ansonsten schwer zugänglich wären.

Die Gummiradwalzen 1 der Erfindung umfassen weiter Transportösen 15, die dazu ausgebildet sind, Transportmittel an der Gummiradwalze 1 zu befestigen. So kann die Gummiradwalze 1 beispielsweise von einem Kran hochgehoben und versetzt werden, wenn die Gummiradwalze 1 über die Transportösen 15 mit einer entsprechenden Aufhängung des Krans verbunden wird. Erfindungsgemäß ist es vorgesehen, dass die Transportösen 15 vom Maschinenrahmen 1 gebildet werden, und insbesondere in den Bereichen der Sichtausnehmungen 11, 18 angeordnet sind. Bevorzugt verlaufen die Transportösen 15 parallel zur Maschinenrahmenaußenkante 21, bzw. liegen im Wesentlichen in einer Ebene mit der Maschinenrahmenaußenkante 21. Auf diese Weise lässt sich die Gummiradwalze 1 besonders einfach über die Aufhängung an den Transportösen 15 ausbalancieren, wobei keine Sichtbehinderung des Fahrers durch die Sichtausnehmungen 11, 18 entsteht. In den gezeigten Ausführungsbeispielen der Figuren weist jede Sichtausnehmung 11, 18 eine entsprechende Transportöse 15 auf.

## Patentansprüche

1. Gummiradwalze (1) zur Verdichtung eines Bodens (8) mit
- einem Maschinenrahmen (3) mit einem Fahrerstand (2), und
- den Maschinenrahmen (3) tragenden vorderen und hinteren Fahrwerkseinrichtungen (5, 6), wobei die Fahrwerkseinrichtungen (5, 6) jeweils wenigstens ein Rad (9, 10) aufweisen,
**dadurch gekennzeichnet,**
**dass** im Maschinenrahmen (3) wenigstens eine Sichtausnehmung (11) für die vordere Fahrwerkseinrichtung (5) ausgebildet ist, wobei die wenigstens eine Sichtausnehmung (11) über ihren gesamten Verlauf hinweg zur Seite hin geöffnet ausgebildet ist, wobei durch die Sichtausnehmung (11) hindurch eine außenliegende Radkante (A, B) der vorderen Fahreinrichtung (5) und eine Lauffläche des wenigstens einen Rades (9) der vorderen Fahrwerkseinrichtung (5) vom Fahrerstand (2) aus einsehbar ist, und wobei die Sichtausnehmung derart ausgebildet ist, dass sie sich in eine Vorwärtsrichtung gesehen in der Horizontalebene zunächst zur Maschinenmitte vergrößert und sich anschließend wieder in Richtung von der Maschinenmitte weg verkleinert.

2. Gummiradwalze (1) nach Anspruch 1,
**dadurch gekennzeichnet,**
**dass** auf jeder Seite der Gummiradwalze jeweils eine Sichtausnehmung (11) für die vordere Fahrwerkseinrichtung (5) ausgebildet ist.

3. Gummiradwalze (1) nach einem der vorhergehenden Ansprüche,
**dadurch gekennzeichnet,**
**dass** im Maschinenrahmen (3) eine weitere Sichtausnehmung (18) für die hintere Fahrwerkseinrichtung (6) ausgebildet ist, wobei die weitere Sichtausnehmung (18) über ihren gesamten Verlauf hinweg zur Seite hin geöffnet ausgebildet ist, und wobei durch die weitere Sichtausnehmung (18) hindurch eine außenliegende Radkante (C) der hinteren Fahrwerkseinrichtung (6) und eine Lauffläche des wenigstens einen Rades (10) der hinteren Fahrwerkseinrichtung (6) vom Fahrerstand (2) aus einsehbar ist, und dass insbesondere ergänzend zusätzlich noch eine Sichtausnehmung vorhanden ist, die über ihren gesamten Verlauf hinweg zur Seite hin geöffnet ausgebildet ist, und durch die hindurch die der außenliegenden Radkante (C) gegenüberliegende Radkante und eine Lauffläche eines Rades (10) der hinteren Fahrwerkseinrichtung vom Fahrstand (6) aus einsehbar ist.

4. Gummiradwalze (1) nach einem der vorhergehenden Ansprüche,
**dadurch gekennzeichnet,**
**dass** wenigstens eine Sichtausnehmung (11, 18) in Vorwärtsrichtung (a) nach vorne und/oder hinten durch vom Maschinenrahmen (3) gebildete Seitenwände (22, 23) begrenzt ist.

5. Gummiradwalze (1) nach Anspruch 4,
**dadurch gekennzeichnet,**
**dass** die in Vorwärtsrichtung (a) vorderen und hinteren vom Maschinenrahmen (3) gebildeten Seitenwände (22, 23) jeweils einer Sichtausnehmung (11, 18) parallel zueinander verlaufen.

6. Gummiradwalze (1) nach einem der vorhergehenden Ansprüche,
**dadurch gekennzeichnet,**
**dass** die Sichtausnehmung (11) derart ausgebildet ist, dass für einen auf dem Fahrstand befindlichen Bediener durch die Sichtausnehmung (11) hindurch über die obere Lauffläche eines Rades (10) hinweg ein vor der Gummiradwalze (1) liegender Bodenbereich einsehbar ist.

7. Gummiradwalze (1) nach einem der vorhergehenden Ansprüche,
**dadurch gekennzeichnet,**
**dass** die Sichtausnehmung (18) für die hintere Fahrwerkseinrichtung (6) in Vorwärtsrichtung (a) nach vorne durch eine vom Maschinenrahmen (3) gebildete Seitenwand (22) begrenzt und in Vorwärtsrichtung (a) nach hinten offen ist.

8. Gummiradwalze (1) nach einem der vorhergehenden Ansprüche,
**dadurch gekennzeichnet,**
**dass** sich die Sichtausnehmungen (11, 18) durch den Maschinenrahmen (3) bis vertikal über die Räder (9, 10) erstrecken.

9. Gummiradwalze (1) nach einem der vorhergehenden Ansprüche,
**dadurch gekennzeichnet,**
**dass** am Maschinenrahmen (3) in Vorwärtsrichtung (a) vor und/oder hinter dem Fahrerstand (2) eine Haube (20) und/oder ein Tank (19) angeordnet ist, und dass sich die Sichtausnehmungen (11, 18) durch die Haube (20) und/oder den Tank (19) hindurch erstrecken.

10. Gummiradwalze (1) nach einem der vorhergehenden Ansprüche,
**dadurch gekennzeichnet,**
**dass** wenigstens eine Sichtausnehmung (11, 18), insbesondere beide Sichtausnehmungen (11) für die vordere Fahrwerkseinrichtung (5), den Maschinenrahmen (3) derart hinterschneidet, dass die Sichtausnehmung (11, 18) zum Teil durch den Maschinenrahmen (3) zur Seite begrenzt ausgebildet ist.

11. Gummiradwalze (1) nach einem der Ansprüche 3 bis 9,
**dadurch gekennzeichnet,**
**dass** die Fahrwerkseinrichtungen (5, 6) mehrere quer zur Vorwärtsrichtung (a) voneinander beabstandete Räder (9, 10) aufweisen, wobei die Räder (9) der vorderen Fahrwerkseinrichtung (5) gegenüber den Rädern (10) der hinteren Fahrwerkseinrichtung (6) quer zur Vorwärtsrichtung (a) auf Lücke versetzt angeordnet sind, und dass die Sichtausnehmung (18) für die hintere Fahrwerkseinrichtung (6) auf die gegenüber der vorderen Radkante (A, B) nach außen versetzte Radkante (C) gerichtet ist.

12. Gummiradwalze (1) nach einem der vorhergehenden Ansprüche,
**dadurch gekennzeichnet,**
**dass** der Fahrerstand (2) ein Dach (27) tragende Tragholme (17) aufweist, und dass die Tragholme (17) derart quer zur Vorwärtsrichtung (a) zur Maschinenmitte hin versetzt angeordnet sind, dass die Sichtausnehmungen (11, 18) vom Fahrer der Gummiradwalze (1) frei vom Fahrerstand (2) aus einsehbar sind.

13. Gummiradwalze (1) nach einem der vorhergehenden Ansprüche,
**dadurch gekennzeichnet,**
**dass** wenigstens eine Sichtausnehmung (11, 18), insbesondere eine Sichtausnehmung (11) für die vordere Fahrwerkseinrichtung (5), vertikal nach oben offen ausgebildet ist.

14. Gummiradwalze (1) nach einem der vorhergehenden Ansprüche,
**dadurch gekennzeichnet,**
**dass** im Bereich einer Sichtausnehmung (11, 18), insbesondere im Bereich der vertikal nach oben offen ausgebildeten Sichtausnehmung (11, 18), ein Aufstieg (15) für einen Bediener vorgesehen ist.

15. Gummiradwalze (1) nach einem der vorhergehenden Ansprüche,
**dadurch gekennzeichnet,**
**dass** zusätzlich zur Sichtausnehmung (11, 18), insbesondere vertikal über dem Aufstieg (15), eine Aufstiegsausnehmung (16) im Maschinenrahmen (3) ausgebildet ist, die bevorzugt in die Sichtausnehmung (11, 18) hinein geöffnet ausgebildet ist.

16. Gummiradwalze (1) nach einem der vorhergehenden Ansprüche,
**dadurch gekennzeichnet,**
**dass** in wenigstens einer Sichtausnehmung (11, 18), bevorzugt einer der Sichtausnehmungen (11) für die vordere Fahrwerkseinrichtung (5), ein Zugangsdeckel (14), insbesondere für einen Betriebsfluidtank oder einen Ballasttank, angeordnet ist.

17. Gummiradwalze (1) nach einem der vorhergehenden Ansprüche,
**dadurch gekennzeichnet,**
**dass** in den vom Maschinenrahmen (3) gebildeten Seitenwänden der Sichtausnehmungen (11, 18) integrierte Transportösen (15) zur Aufhängung der Gummiradwalze (1) angeordnet sind.

## Claims

1. Rubber tire roller (1) for compacting a ground (8), comprising
- a machine frame (3) with an operating platform (2), and
- front and rear undercarriages (5, 6) supporting the machine frame (3), wherein the undercarriages (5, 6) each comprise at least one wheel (9, 10),
**characterized in that**
at least one viewing indentation (11) for the front undercarriage (5) is configured in the machine frame (3), wherein the at least one viewing indentation (11) is configured to be open to one side over its entire length, wherein an outer wheel edge (A, B) of the front undercarriage and a tread of the at least one wheel (9) of the front undercarriage (5) can be viewed from the operating platform (2) and wherein the viewing indentation is configured in such a way that, when viewed in the forward direction, it initially broadens in the horizontal plane toward the middle of the machine and subsequently narrows again away from the middle of the machine.

2. Rubber tire roller (1) according to claim 1,
**characterized in that**
a viewing indentation (11) is configured on each side of the rubber tire roller for the front undercarriage (5).

3. Rubber tire roller (1) according to one of of the preceding claims,
**characterized in that**
a further viewing indentation (18) is configured in the machine frame (3) for the rear undercarriage (6), wherein the further viewing indentation (18) is configured to be open to one side over its entire length and wherein both an outer wheel edge (C) of the rear undercarriage (6) and a wheel tread of the at least one wheel (10) of the rear undercarriage (6) can be viewed from the operating platform (2) through the further viewing indentation (18), and **in that** in particular in addition a further viewing indentation is provided, which is configured to be open to one side over its entire length and through which the wheel edge opposite the outer wheel edge (C) and a tread of a wheel (10) of the rear undercarriage can be observed from the operating platform (6).

4. Rubber tire roller (1) according to one of of the preceding claims,
**characterized in that**
at least one viewing indentation (11, 18) is limited in the forward direction (a) to the front and/or to the rear by side walls (22, 23) formed by the machine frame (3).

5. Rubber tire roller (1) according to claim 4,
**characterized in that**,
in relation to the forward direction (a), the front and rear side walls (22, 23) of the viewing indentation (22, 23) formed by the machine frame (3) extend parallel to one other.

6. Rubber tire roller (1) according to one of of the preceding claims,
**characterized in that**
the viewing indentation (11) is configured in such a way that a ground area lying in front of the rubber tire roller (1) can be viewed by an operator on the operating platform through the viewing indentation (11) over the upper tread of a wheel (10).

7. Rubber tire roller (1) according to one of of the preceding claims,
**characterized in that**
the viewing indentation (18) for the rear undercarriage (6) is limited in the forward direction (a) to the front by a side wall (22) formed by the machine frame (3) and is open to the rear relative to the forward direction (a).

8. Rubber tire roller (1) according to one of of the preceding claims,
**characterized in that**
the viewing indentations (11, 18) extend through the machine frame (3) until vertically over the wheels (9, 10).

9. Rubber tire roller (1) according to one of of the preceding claims,
**characterized in that**,
in relation to the forward direction (a), a hood (20) and/or a tank (19) is arranged on the machine frame (1) in front of and/or behind the operating platform (2), and **in that** the viewing indentations (11, 18) extend through the hood (20) and/or the tank (19).

10. Rubber tire roller (1) according to one of of the preceding claims,
**characterized in that**
at least one viewing indentation (11, 18), in particular both viewing indentations (11) for the front undercarriage (5), is cut into the machine frame (3) in such a way that the viewing indentation (11, 18) is configured to be partially limited to one side by the machine frame (3).

11. Rubber tire roller (1) according to one of of claims 3 to 9,
**characterized in that**
the undercarriages (5, 6) comprise several wheels (9, 10) spaced apart from one another transversely to the forward direction (a), wherein the wheels (9) of the front undercarriage (5) are arranged so as to be offset transversely to the forward direction (a) in relation to the wheels (10) of the rear undercarriage (6) and in the gaps of the latter, and **in that** the viewing indentation (18) for the rear undercarriage (6) is directed to the wheel edge (C) that is offset outwards in relation to the front wheel edge (A, B).

12. Rubber tire roller (1) according to one of of the preceding claims,
**characterized in that**
the operating platform (2) comprises support bars (17) supporting a roof (27), and **in that** the support bars (17) are arranged transversely to the forward direction (a) toward the middle of the machine in such a way that the viewing indentations (11, 18) can be viewed by the driver of the rubber tire roller (1) from the operating platform (2) in an unobstructed manner.

13. Rubber tire roller (1) according to one of of the preceding claims,
**characterized in that**
at least one viewing indentation (11, 18), in particular a viewing indentation (11) for the front undercarriage (5), is configured to be open at the top.

14. Rubber tire roller (1) according to one of of the preceding claims,
**characterized in that**
a step (15) for an operator is provided in the region of the viewing indentation (11, 18), in particular in the region of the viewing indentation (11, 18) configured to be open at the top.

15. Rubber tire roller (1) according to one of of the preceding claims,
**characterized in that**,
in addition to the viewing indentation (11, 18), in particular vertically above the step (15), a step recess (16) is configured in the machine frame (3), which is preferably configured to be open toward the inside of the viewing indentation (11, 18).

16. Rubber tire roller (1) according to one of of the preceding claims,
**characterized in that**
an access cover (14), in particular for a working fluid tank or a ballast tank, is arranged in at least one viewing indentation (11, 18), preferably in one of the viewing indentations (11) for the front undercarriage (5).

17. Rubber tire roller (1) according to one of of the preceding claims,
**characterized in that**
integrated transport loops (15) for the suspension of the rubber tire roller (1) are arranged in the side walls of the viewing indentations (11, 18) formed by the machine frame (3).

## Revendications

1. Rouleau compacteur (1) à pneus pour le compactage d'un sol (8), comprenant :
- un châssis (3) de machine avec un poste de conduite (2), et
- des trains de roulement avant et arrière (5, 6) supportant le châssis (3) de machine, dans lequel les trains de roulement (5, 6) comprennent chacun au moins une roue (9, 10),
***caractérisé en ce que***
au moins une échancrure (11) pour une bonne vision du train de roulement avant (5) est ménagée dans le châssis (3) de machine, dans lequel ladite au moins une échancrure (11) de vision est configurée de manière à être ouverte sur un côté sur toute sa longueur, dans lequel un bord extérieur (A, B) de roue du train de roulement avant et une bande de roulement de ladite au moins une roue (9) du train de roulement avant (5) peuvent être vus depuis le poste de conduite (2), et dans lequel l'échancrure de vision est configurée d'une manière telle que, lorsqu'on la voit dans la direction de la marche avant, elle s'élargit tout d'abord dans le plan horizontal en direction du milieu de la machine et ensuite se rétrécit en s'éloignant du milieu de la machine.

2. Rouleau compacteur (1) à pneus selon la revendication 1,
***caractérisé en ce que***
une échancrure (11) de vision est ménagée sur chaque côté du rouleau compacteur à pneus pour le train de roulement avant (5).

3. Rouleau compacteur (1) à pneus selon l'une quelconque des revendications précédentes,
***caractérisé en ce que***
une échancrure de vision supplémentaire (18) est ménagée dans le châssis (3) de machine pour le train de roulement arrière (6), dans lequel l'échancrure de vision supplémentaire (18) est configurée de manière à être ouverte sur un côté sur toute sa longueur, et dans lequel à la fois un bord extérieur (C) de roue du train de roulement arrière (6) et une bande de roulement de ladite au moins une roue (10) du train de roulement arrière (6) peuvent être vus depuis le poste de conduite (2) à travers l'échancrure de vision supplémentaire (18), et ***en ce que**,* en particulier de plus une échancrure de vision supplémentaire est ménagée, qui est configurée pour être ouverte sur un côté sur toute sa longueur et à travers laquelle le bord de la roue opposé au bord extérieur (C) de roue et une bande de roulement d'une roue (10) du train de roulement arrière peuvent être observés depuis le poste de conduite (6).

4. Rouleau compacteur (1) à pneus selon l'une quelconque des revendications précédentes,
***caractérisé en ce que***
au moins une échancrure (11, 18) de vision est limitée dans la direction de la marche avant (a) à l'avant et/ou à l'arrière par des parois latérales (22, 23) formées par le châssis (3) de machine.

5. Rouleau compacteur (1) à pneus selon la revendication 4,
***caractérisé en ce que***
en relation avec la direction de la marche avant (a), les parois latérales avant et arrière (22, 23) de l'échancrure de vision (11, 18) formées par le châssis (3) s'étendent parallèlement l'une à l'autre.

6. Rouleau compacteur (1) à pneus selon l'une quelconque des revendications précédentes,
***caractérisé en ce que***
l'échancrure de vision (11) est configurée de telle manière qu'une aire au sol se trouvant à l'avant du rouleau compacteur (1) à pneus peut être vue par un opérateur se trouvant dans le poste de conduite, ceci à travers l'échancrure de vision (11) au-dessus de la bande de roulement supérieure d'une roue (10).

7. Rouleau compacteur (1) à pneus selon l'une quelconque des revendications précédentes,
***caractérisé en ce que***
l'échancrure de vision (18) pour le train de roulement arrière (6) est limitée dans la direction de la marche avant (a) à l'avant par une paroi latérale (22) formée par le châssis (3) de machine et est ouverte à l'arrière par rapport à la direction de la marche avant (a).

8. Rouleau compacteur (1) à pneus selon l'une quelconque des revendications précédentes,
***caractérisé en ce que***
les échancrures de vision (11, 18) s'étendent à travers le châssis (3) de machine jusqu'à la verticale au-dessus des roues (9, 10).

9. Rouleau compacteur (1) à pneus selon l'une quelconque des revendications précédentes,
***caractérisé en ce que***
en relation avec la direction de la marche avant (a), un capot (20) et/ou un réservoir (19) est/sont disposé(s) sur le châssis (3) de machine devant et/ou derrière le poste de conduite (2), et ***en ce que*** les échancrures de vision (11, 18) s'étendent à travers le capot (20) et/ou le réservoir (19).

10. Rouleau compacteur (1) à pneus selon l'une quelconque des revendications précédentes,
***caractérisé en ce que***
au moins une échancrure de vision (11, 18), et en particulier les deux échancrures de vision (11, 18), pour le train de roulement avant (5) coupe(nt) le châssis (3) de machine d'une manière telle que l'échancrure de vision (11, 18) est configurée pour être partiellement limitée à un côté par le châssis (3) de machine.

11. Rouleau compacteur (1) à pneus selon l'une quelconque des revendications 3 à 9,
***caractérisé en ce que***
les trains de roulement (5, 6) comprennent plusieurs roues (9, 10) espacées les unes des autres transversalement par rapport à la direction de marche avant (a), les roues (9) du train de roulement avant (5) étant disposées de façon à être décalées transversalement à la direction de marche avant (a) en relation avec les roues (10) du train de roulement arrière (6) et dans les intervalles de ces dernières, et ***en ce que*** l'échancrure de vision (18) pour le train de roulement arrière (6) est dirigée vers le bord (C) de roue qui est décalé vers l'extérieur par rapport au bord de roue avant (A, B).

12. Rouleau compacteur (1) à pneus selon l'une quelconque des revendications précédentes,
***caractérisé en ce que***
le poste de conduite (2) comprend des barres de support (17) supportant un pavillon (27), et ***en ce que*** les barres de support (17) sont disposées transversalement à la direction de marche avant (a) vers le milieu de la machine d'une telle manière que les échancrures de vision (11, 18) puissent être vues par le conducteur du rouleau compacteur (1) à pneus depuis le poste de conduite (2) d'une manière non obstruée.

13. Rouleau compacteur (1) à pneus selon l'une quelconque des revendications précédentes,
***caractérisé en ce que***
au moins un échancrure de vision (11, 18), en particulier une échancrure de vision (11) pour le train de roulement avant (5), est configurée pour être ouverte verticalement sur le dessus.

14. Rouleau compacteur (1) à pneus selon l'une quelconque des revendications précédentes,
***caractérisé en ce que***
une marche (15) pour un opérateur est prévue dans la zone de l'échancrure de vision (11, 18), en particulier dans la zone de l'échancrure de vision (11, 18) configurée pour être ouverte verticalement sur le dessus.

15. Rouleau compacteur (1) à pneus selon l'une quelconque des revendications précédentes,
***caractérisé en ce que***
outre l'échancrure de vision (11, 18), en particulier verticalement au-dessus de la marche (15), un évidement (16) pour la marche est ménagé dans le châssis (3) de machine, qui est de manière préférée configuré pour être ouvert vers l'intérieur de l'échancrure de vision (11, 18).

16. Rouleau compacteur (1) à pneus selon l'une quelconque des revendications précédentes,
***caractérisé en ce que***
un couvercle d'accès (14), en particulier pour un réservoir de fluide ou un réservoir de ballast, est ménagé dans au moins une échancrure de vision (11, 18), de manière préférée dans l'une des échancrures de vision (11) pour le train de roulement avant (5).

17. Rouleau compacteur (1) à pneus selon l'une quelconque des revendications précédentes,
***caractérisé en ce que***
des anneaux de transport intégrés (15) pour la suspension du rouleau compacteur (1) à pneus sont ménagés dans les parois latérales des échancrures de vision (11, 18), parois formées par le châssis (3) de machine.
